(19) Europäisches Patentamt / European Patent Office / Office européen des brevets

(11) **EP 4 056 953 A1**

(12) **EUROPEAN PATENT APPLICATION**

(43) Date of publication:
**14.09.2022 Bulletin 2022/37**

(21) Application number: **22155667.3**

(22) Date of filing: **08.02.2022**

(51) International Patent Classification (IPC):
**G01C 21/34** (2006.01)    **G06Q 10/04** (2012.01)
**G06Q 50/30** (2012.01)

(52) Cooperative Patent Classification (CPC):
**G01C 21/3438; G01C 21/3469;** G06Q 10/047;
G06Q 50/30

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.03.2021 JP 2021039560**

(71) Applicant: **TOYOTA JIDOSHA KABUSHIKI
KAISHA**
**Toyota-shi, Aichi-ken, 471-8571 (JP)**

(72) Inventors:
• **YOKOYAMA, Daiki**
  **Toyota-shi, 471-8571 (JP)**
• **CHIBA, Hiroya**
  **Toyota-shi, 471-8571 (JP)**
• **KAGEURA, Yoshiyuki**
  **Toyota-shi, 471-8571 (JP)**
• **SHIMADA, Masanori**
  **Toyota-shi, 471-8571 (JP)**
• **SAKAYANAGI, Yoshihiro**
  **Toyota-shi, 471-8571 (JP)**
• **MORITA, Hiroki**
  **Toyota-shi, 471-8571 (JP)**

(74) Representative: **D Young & Co LLP**
**120 Holborn**
**London EC1N 2DY (GB)**

(54) **RIDESHARING MANAGEMENT SYSTEM**

(57)    A ridesharing management system which enables a plurality of users using a ridesharing service to share a vehicle as passengers, wherein the vehicle (1) is comprised of a hybrid vehicle, and a boundary (GF) is established between the inside of an engine restricted zone in which operation of an internal combustion engine (20) is restricted and the outside of the engine restricted zone. It is predicted whether the SOC amount of the battery (3) will become less than a setting value during travel in the engine restricted zone if traveling through a stop in the engine restricted zone and a stop outside the engine restricted zone due to a pick-up request or drop-off request from a user. A route order that does not result in the SOC amount of the battery (3) becoming less than the setting value during travel in the engine restricted zone is suggested.

FIG. 9A

FIG. 9B

EP 4 056 953 A1

**Description**

FIELD

The present invention relates to a ridesharing management system.

BACKGROUND

Among hybrid vehicles which are provided with an internal combustion engine used for electric power generation or for driving, a battery which is charged by means of electric power generation action by a generator powered by the internal combustion engine or by means of regenerative control, and an electric motor which is powered by the battery, there are known hybrid vehicles which are configured so that the internal combustion engine stops running and the vehicle is powered by the electric motor when the vehicle passes through an area with strengthened air pollution restrictions (for example, see Japanese Unexamined Patent Publication No. 07-75210). In such hybrid vehicles, the battery is charged by electric power generation by the generator powered by the internal combustion engine when the battery charge drops to a lower limit, and the lower limit for the battery charge is set slightly high so that there will not be a shortage of battery charge while the vehicle is passing through an area with strengthened air pollution restrictions.

SUMMARY

On the other hand, ridesharing systems that enable a plurality of users using a ridesharing service to share a vehicle as passengers are known. In this regard, however, if such ridesharing systems are employed in regions where the above-mentioned areas with strengthened air pollution restrictions have been established and a hybrid vehicle is used as the vehicle, for example when there are pick-up requests from a plurality of users and the vehicle is made to travel to the pick-up stops of the users in the order of geographical convenience as seen from the pick-up requests, situations are liable to arise where the battery charge, i.e., the SOC (state of charge) showing the battery charge, will drop while the vehicle is traveling in an area with strengthened air pollution restrictions despite the lower limit of battery charge being set slightly high like in the above-mentioned known hybrid vehicles, causing the electric motor to not be able to power the vehicle. However, the above patent literature does not suggest any sort of method for avoiding such situations.

The present invention provides a ridesharing management system which is able to avoid the occurrence of such situations.

According to the present invention, there is provided a ridesharing management system which enables a plurality of users using a ridesharing service to share a vehicle as passengers, wherein

the vehicle is comprised of a hybrid vehicle which is powered solely by an electric motor or by both of the electric motor and an internal combustion engine,
a boundary is established between an inside of an engine restricted zone in which running of the internal combustion engine is restricted and an outside of the engine restricted zone, and
the ridesharing management system comprises:

an information acquisition unit which acquires position information for the vehicle and information relating to the boundary,
a navigation device for searching for a travel route of the vehicle to a destination,
an SOC amount acquisition unit which acquires an SOC amount of a battery as a source of supply of electric power to the electric motor,
a user request acquisition unit which acquires requests for pick-ups and drop-offs from the users,
an SOC amount prediction unit which predicts whether the SOC amount of the battery will become less than a setting value during travel in the engine restricted zone based on search results by the navigation device and acquisition results of the information acquisition unit, the SOC amount acquisition unit, and the user request acquisition unit in case of traveling through a stop in the engine restricted zone and a stop outside the engine restricted zone due to a pick-up request or drop-off request from the users, and
a route order suggestion unit which suggests, as a route order for the stops, a route order in which the SOC amount of the battery will not become less than the setting value during travel in the engine restricted zone based on prediction results of the SOC amount prediction unit.

According to the present invention, it is possible to present a vehicle route order that will not lead to the SOC amount of the battery becoming less than a setting value.

BRIEF DESCRIPTION OF DRAWINGS

FIG. 1 is a view showing schematic representations of a vehicle and a server.
FIG. 2A and FIG. 2B are views of the configuration of a vehicle driving unit.
FIG. 3 is a view for explaining an SOC amount.
FIG. 4 is a flow chart for carrying out charging control.
FIG. 5 is a view schematically showing a road map.
FIG. 6 is a flow chart for carrying out vehicle control.
FIG. 7 is a view for conceptually explaining an embodiment according to the present invention.
FIG. 8 is a view showing user stop order patterns.
FIG. 9A and FIG. 9B are views showing specific examples of user stops.
FIG. 10 is a view showing user stop order patterns.
FIG. 11 is a view showing pick-up and drop-off requests from users.
FIG. 12A and FIG. 12B are explanatory views of travel routes of the vehicle.
FIG. 13A and FIG. 13B are explanatory views of travel routes of the vehicle.
FIG. 14 is a view schematically showing changes in SOC amount.
FIG. 15 is a view showing an electric motor-powered region and an internal combustion engine-powered region.
FIG. 16A, FIG. 16B, and FIG. 16C are views schematically showing display images.
FIG. 17A and FIG. 17B are views schematically showing display images.
FIG. 18 is a flow chart for suggesting a route order.
FIG. 19 is a flow chart for suggesting a route order.
FIG. 20A and FIG. 20B are explanatory views of an SOC amount calculation method.
FIG. 21 is a flow chart for calculating an SOC amount SOC(R1).
FIG. 22 is a flow chart for carrying out charging.
FIG. 23 is a flow chart for calculating an SOC amount SOC(R2).
FIG. 24 is a flow chart for calculating an SOC amount SOC(R3).
FIG. 25 is a flow chart for calculating an SOC amount SOC(R4).
FIG. 26 is a view of the configuration of the functions of the ridesharing management system according to the present invention.

DESCRIPTION OF EMBODIMENTS

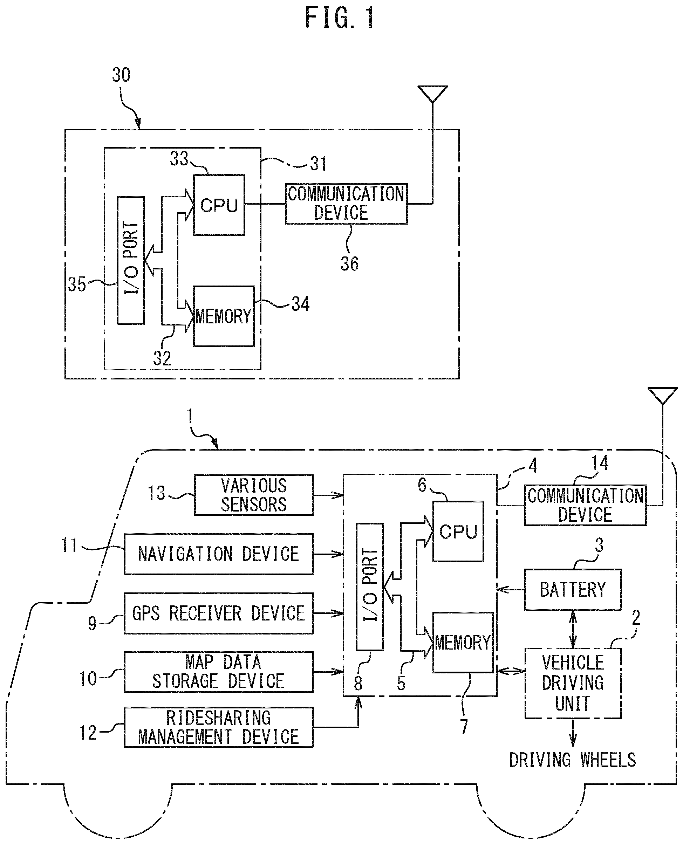

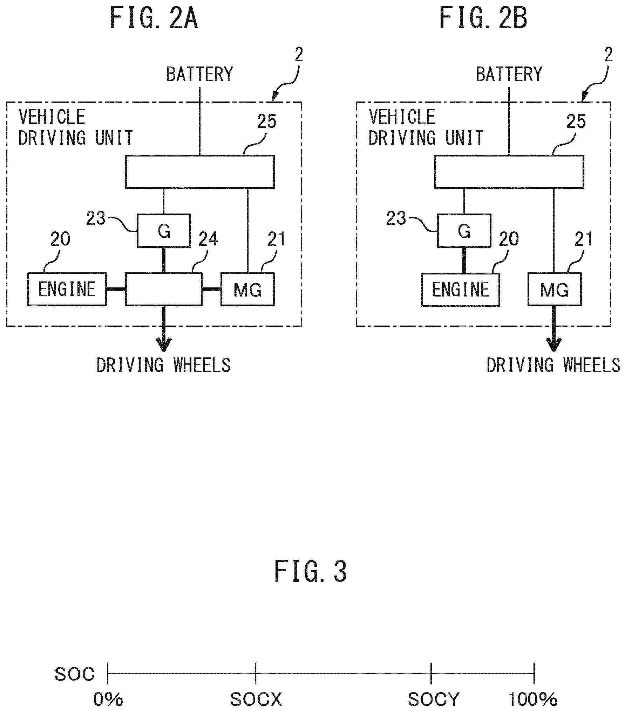

The present invention relates to a ridesharing management system which enables a plurality of users using a ridesharing (carpooling) service to share a vehicle as passengers. Referring to FIG. 1, 1 indicates a vehicle used in the ridesharing service. The vehicle 1 comprises a hybrid vehicle powered solely by an electric motor or both an electric motor and internal combustion engine. Further, in FIG. 1, 2 indicates a vehicle driving nuit for providing driving force to driving wheels, 3 indicates a battery, and 4 indicates an electronic control unit installed inside the vehicle 1. As shown in FIG. 1, the electronic control unit 4 comprises a digital computer and is provided with a CPU (microprocessor) 6, a memory7 comprising a ROM and RAM, and an input/output port 8, which are connected with each other by a bidirectional bus 5.

Further, inside the vehicle 1, a GPS (Global Positioning System) receiver device 9 for receiving radio waves from artificial satellites to detect the current position of the vehicle 1, a map data storage device 10 storing map data and the like, a navigation device 11 for searching for a travel route to a destination, and a ridesharing management device 12 provided with a display screen and an operating unit are mounted. Additionally, inside the vehicle 1, various sensors 13 such as an accelerator position sensor, engine speed sensor, vehicle speed sensor, ambient temperature sensor, and barometric pressure sensor are mounted. The GPS receiver device 9, map data storage device 10, navigation device 11, ridesharing management device 12, and various sensors 13 are connected to the electronic control unit 4.

On the other hand, in FIG. 1, 30 indicates a server. As shown in FIG. 1, inside the server 30, an electronic control unit 31 is set. The electronic control unit 31 comprises a digital computer and is provided with a CPU (microprocessor) 33, memory 34 comprising a ROM and RAM, and input/output port 35, which are connected to each other through a bidirectional bus 32. Further, inside the server 30, a communication device 36 for communicating with the vehicle 1 is set. On the other hand, at the vehicle 1, a communication device 14 for communicating with the server 30 is mounted.

FIG. 2A and FIG. 2B are views of the configuration of the vehicle driving unit 2 shown in FIG. 1 and represent different types of typical hybrid systems. These hybrid systems are well known and will therefore be explained in an extremely simplified manner. First, referring to FIG. 2A, the vehicle driving unit 2 is provided with an internal combustion engine 20, an electric motor 21, a generator 23, a power splitting mechanism 24 comprising a planetary gear mechanism for example, and a motor control device 25. The electric motor 21 also fulfils the role of a generator and is thus commonly called a "motor-generator". For example, at low travel speeds, the vehicle 1 is powered by the electric motor 21. At this time, electric power is supplied from the battery 3 to the electric motor 21 through the motor control device 25, and the output of the electric motor 21 is transmitted to the driving wheels by means of the power splitting mechanism 24.

On the other hand, at medium to fast travel speeds, the vehicle 1 is powered by the internal combustion engine 20 and electric motor 21. At this time, on the one hand, a portion of the output of the internal combustion engine 20 is transmitted to the driving wheels by the power splitting mechanism 24, and on the other hand, the generator 23 is driven by a portion of the output of the internal combustion engine 20, the electric motor 21 is drive by the generated electric power from the generator 23 and the output of the electric motor 21 is transmitted to the driving wheels by the power splitting mechanism 24. Further, regenerative control is carried out when the vehicle 1 is braking such that the electric motor 21 functions as a generator and the battery 3 is charged by the generated electric power from the electric motor 21. Further, if the charge of the battery 3 drops, the generator 23 is driven by the internal combustion engine 20 through the power splitting mechanism 24 and the battery 3 is charged by the generated electric power from the generator 23.

Next, referring to FIG. 2B, the vehicle driving unit 2 is provided with an internal combustion engine 20, an electric motor 21, a generator 23, and a motor control device 25. In the hybrid system shown in FIG. 2B as well, the electric motor 21 also fulfils the role of a generator and is thus commonly called a "motor-generator". In this hybrid system, the vehicle 1 is constantly powered by the electric motor 21. On the other hand, if the charge of the battery 3 drops, the generator 23 is powered by the internal combustion engine 20, and the battery 3 is charged by the generated electric power from the generator 23. Further, in this hybrid system as well, regenerative control is carried out when the vehicle 1 is braking such that the electric motor 21 functions as a generator and the battery 3 is charged by the generated electric power from the electric motor 21. In the hybrid systems shown in either of FIG. 2A and FIG. 2B, the internal combustion engine 20 and the power splitting mechanism 24 are controlled by an output signal from the electronic control unit 4, and the electric motor 21 and the generator 23 are controlled by the motor control device 25 based on the output signal from the electronic control unit 4.

In this regard, if the mode in which the vehicle 1 is powered solely by the electric motor 21 is called an EV mode and the mode in which the vehicle 1 is powered by both the internal combustion engine 20 and electric motor 21 is called an HV mode, in the hybrid vehicle 1 provided with the hybrid system shown in FIG. 2A, one of the modes among the EV mode and HV mode would be selectively switched to. On the other hand, in the hybrid vehicle 1 provided with the hybrid system shown in FIG. 2B, the vehicle 1 is powered solely by the electric motor 21 and the internal combustion engine 20 is used only to power the generator 23 and charge the battery 3; therefore, the driving mode of the vehicle 1 would always be the EV mode. Note that the hybrid systems shown in FIG. 2A and FIG. 2B are typical examples. The present invention can use a variety of types of hybrid systems. Note that the present invention will be explained with a focus on a case in which the hybrid system shown in FIG. 2A is used.

FIG. 3 shows an SOC (state of charge) amount representing the charge of the battery 3. In FIG. 3, the SOC amount is 100% when the charge of the battery 3 is full and 0% when the charge of the battery 3 is 0. Further, in the hybrid systems shown in FIG. 2A and FIG. 2B, if, for example, the SOC amount drops to a set lower limit SOCX, the generator 23 is powered by the internal combustion engine 20 until the SOC amount rises to a preset upper limit SOCY and the battery 3 is charged with the generated electric power from the generator 23. Note that the SOC amount is sometimes simply expressed as "SOC" below. Note that the amount of current flowing into and out of the battery 3 and the output voltage of the battery 3 are constantly detected, and the SOC amount is calculated in the electronic control unit 4 based on the detected amount of current flow into and out of the battery 3 and the like.

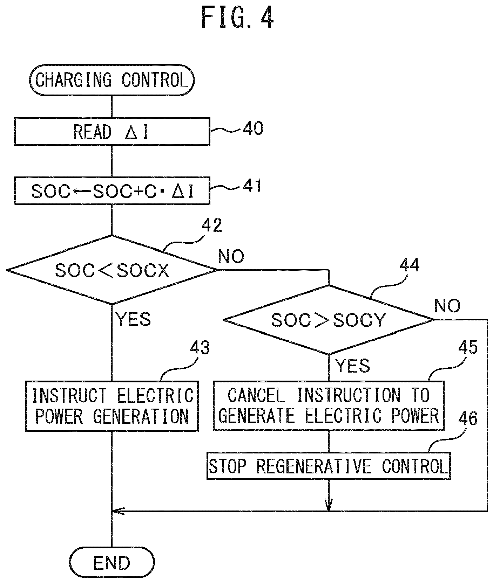

FIG. 4 shows a charging control routine for the battery 3 executed at the electronic control unit 4. This charging control routine is executed by interruption in fixed intervals. Referring to FIG. 4, first, at step 40, the amount of current flow $\Delta I$ to the battery 3 during the fixed interval is read. Next, at step 41, the product of the amount of current flow $\Delta I$ to the battery 3 during the fixed interval and a constant C is added to an SOC amount SOC. Note that, the amount of current flow $\Delta I$ is minus when current is flowing out from the battery 3. Note that this SOC amount SOC calculation method is merely one extremely simple example of a calculation method, and various known SOC amount SOC calculation methods can be used.

Next, at step 42, it is judged whether the SOC amount SOC falls below the set lower limit SOCX. When it is judged that the SOC amount SOC falls below the set lower limit SOCX, the routine proceeds to step 43 where an electric power generation instruction is issued. When the electric power generation instruction is issued, the generator 23 is powered by the internal combustion engine 20 and the battery 3 is charged by the generated electric power from the generator 23. On the other hand, when it is judged at step 42 that the SOC amount SOC does not fall below the set lower limit SOCX, the routine proceeds to step 44 where it is judged whether the SOC amount SOC exceeds a preset upper limit SOCY. When it is judged that the SOC amount SOC exceeds the preset upper limit SOCY, the routine proceeds to step 45 where the electric power generation instruction is cancelled. If the electric power generation instruction is cancelled, running of the generator 23 by the internal combustion engine 20 is stopped and charging of the battery 3 is stopped. Next, at step 46, regenerative control is stopped.

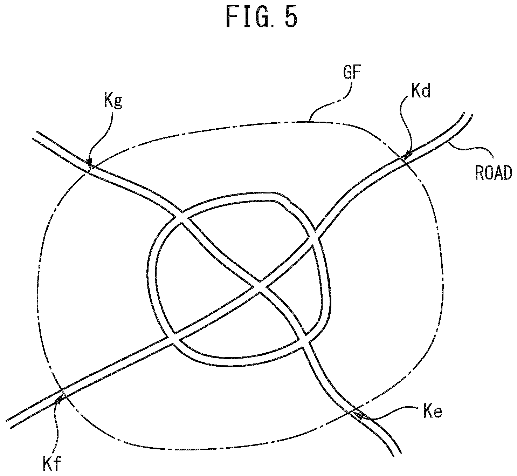

Now, there have been an increasing number of countries in recent years that have been establishing engine restricted zones where there are restrictions on driving by internal combustion engines from the viewpoint of preventing air pollution, the viewpoint of reducing noise, or other viewpoints, and these engine restricted zones have regulations prohibiting running of an internal combustion engine. In FIG. 5, a boundary GF between the inside and outside of an engine restricted zone established in a certain region is schematically shown, and the inside of the boundary GF is the engine restricted zone. The boundary GF is commonly called "geofencing". The boundary GF may be fixed or may change in position for reasons such as the state of air pollution and the like.

In FIG. 5, Kd, Ke, Kf, and Kg indicate the positions of roads on the boundary GF. Gates may be provided at the road positions Kd, Ke, Kf, and Kg on the boundary GF. In such cases, an occupant of the vehicle 1 will be able to recognize when the vehicle 1 has entered an engine restricted zone by passing through a gate. Further, in cases in which a signal indicating that the vehicle 1 has entered an engine restricted zone is issued at this time from a device provided at the gate, it is possible to recognize when the vehicle 1 has entered the engine restricted zone by receiving this signal.

On the other hand, information relating to the boundary GF, i.e., geofencing, is sometmes stored in the map data storage device 10. Further, information relating to the boundary GF, i.e., geofencing, is sometimes stored in the memory 34 of the server 30 and the information relating to the boundary GF, i.e., geofencing, is transmitted from the server 30 to the vehicle 1. In these cases, the position of the boundary GF, i.e., geofencing, may be displayed on the display screen of the navigation device 11 based on the map information stored in the map data storage device 10 or the map information transmitted from the server 30 to the vehicle 1 and the vehicle 1 having entered the engine restricted zone may be recognized from the map information displayed on the display screen of the navigation device 11.

Note that in cases where the hybrid system shown in FIG. 2A is used, when the driver or other occupant recognizes that the vehicle 1 has entered the engine restricted zone, normally the driving mode would be switched to the EV mode by the driver so that running of the internal combustion engine 20 is stopped and the vehicle 1 is powered by the electric motor 21. On the other hand, in cases where the hybrid system shown in FIG. 2B is used, when the driver or other occupant recognizes that the vehicle 1 has entered the engine restricted zone, normally the driver would stop running the internal combustion engine 20, stopping running of the generator 23 for charging the battery 3. Note that when the vehicle 1 has entered the engine restricted zone, sometimes the driving mode automatically switches to the EV mode if the hybrid system shown in FIG. 2A is used and the internal combustion engine 20 automatically stops being run if the hybrid system shown in FIG. 2B is used.

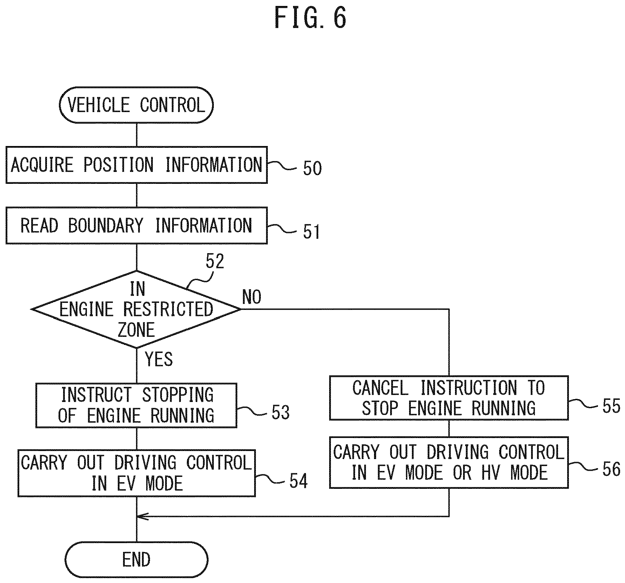

FIG. 6 shows a vehicle control routine in a case in which the driving mode is automatically switched to the EV mode when the vehicle 1 has entered the engine restricted zone in a case in which the hybrid system shown in FIG. 2A is used. This routine is executed by interruption at fixed intervals at the CPU 6 of the electronic control unit 4 installed in the vehicle 1. Referring to FIG. 6, first, at step 50, the current position of the vehicle 1 is acquired based on reception signals received by the GPS receiver device 9 and map data stored in the map data storage device 10. Next, at step 51, information relating to the boundary GF between the inside and the outside of the engine restricted zone such as road positions Kd, Ke, Kf, and Kg positioned on the boundary GF is read. In this case, as the information relating to the boundary GF, either information stored in the map data storage device 10 or information relating to the boundary GF transmitted from the server 40 to the vehicle 1 is used.

Next, at step 52, it is judged whether the vehicle 1 is currently traveling in the engine restricted zone in which running of the internal combustion engine 20 is restricted based on the acquired current position of the vehicle 1 and the information relating to the boundary GF. When it is judged that the vehicle 1 is currently traveling in the engine restricted zone, the routine proceeds to step 53 where an instruction to stop running the internal combustion engine 20 is issued. If the instruction to stop running the internal combustion engine 20 is issued, the routine proceeds to step 54 where the operation of the internal combustion engine 20 is stopped and driving control to power the vehicle 1 through the electric motor 21 is continued until the instruction to stop running the internal combustion engine 20 is cancelled. That is, at this time, driving control is performed in the EV mode in which the vehicle 1 is powered solely by the electric motor 21.

On the other hand, when it is judged at step 52 that the vehicle 1 is not currently traveling in the engine restricted zone, the routine proceeds to step 55 where the instruction to stop running the internal combustion engine 20 is cancelled. If the instruction to stop running the internal combustion engine 20 is cancelled, the internal combustion engine 20 can be run. Next, at step 56, driving control is performed in one mode among the EV mode in which the vehicle 1 is powered solely by the electric motor 21 and the HV mode in which the vehicle 1 is powered by both the internal combustion engine 20 and the electric motor 21 depending on the driving state of the vehicle 1. Note that at this time, the generator 23 can be powered by the internal combustion engine 20 to charge the battery 3.

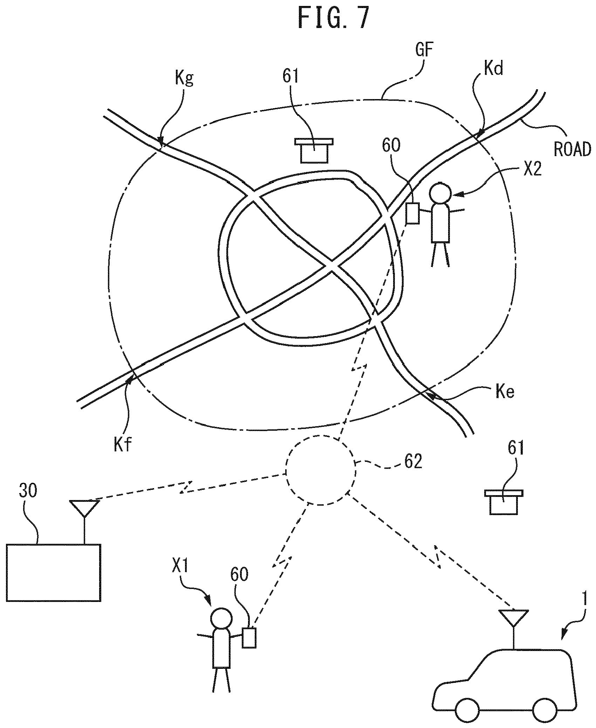

Next, referring to FIG. 7, the gist of the ridesharing system will be explained. Referring to FIG. 7, the vehicle 1 and server 30 shown in FIG. 1 and the boundary GF shown in FIG. 5 are illustrated in FIG. 7. Further, in FIG. 7, Xi (i=1, 2, 3...N) represents users using the ridesharing service to share the vehicle 1 as passengers, and FIG. 7 shows two users, user X1 and user X2. Note that users using the ridesharing service to share the vehicle 1 as passengers will simply be referred to as "users" below. Further, in FIG. 7, 60 represents portable terminals belonging to the users X1 and X2, and 61 represents a charging station for charging the battery 3 installed in the vehicle 21.

In the ridesharing system shown in FIG. 7, the vehicle 1, server 30, and portable terminals 61 are configured so as to be able to mutually communicate with each other over a communication network 62. When, for example, a user Xi wishes to use the ridesharing service, the respective portable terminal 60 would be used to access a booking system for the ridesharing service managed by the server 30 and register the name, desired pick-up stop, desired pick-up time, desired drop-off stop, and desired drop-off time of the user Xi in a booking list in the server 30. In the example shown in FIG. 7, in this way, the name, desired pick-up stop, desired pick-up time, desired drop-off stop, and desired drop-off time of the user X1 and the name, desired pick-up stop, desired pick-up time, desired drop-off stop, and desired drop-off time of the user X2 are registered in the booking list in the server 30. The booking list can be accessed from each vehicle 1 used in the ridesharing service. Accordingly, the driver of each vehicle 1 used in the ridesharing service can understand from the booking list that the two users X1 and X2 desire to share a ride.

In this case, when it is judged that sharing a ride is possible in the vehicle 1 from the desired pick-up stops, desired pick-up times, desired drop-off stops, and desired drop-off times of the users X1 and X2, the users X1 and X2 are notified that sharing a ride is possible. In response, the users X1 and X2 respond as to whether they desire to share the vehicle 1 from which the notification was received. When it is confirmed from the responses that the users X1 and X2 both wish to share the vehicle 1, the vehicle 1 begins moving so as to enable the users X1 and X2 to share rides. Note that the ridesharing service explained above is merely one simple example of a ridesharing service. Various known ridesharing services can be used such as matching systems which automatically match users Xi for whom sharing a ride is possible. The present invention can be applied to any type of ridesharing service capable of finding users Xi for whom sharing a ride is possible.

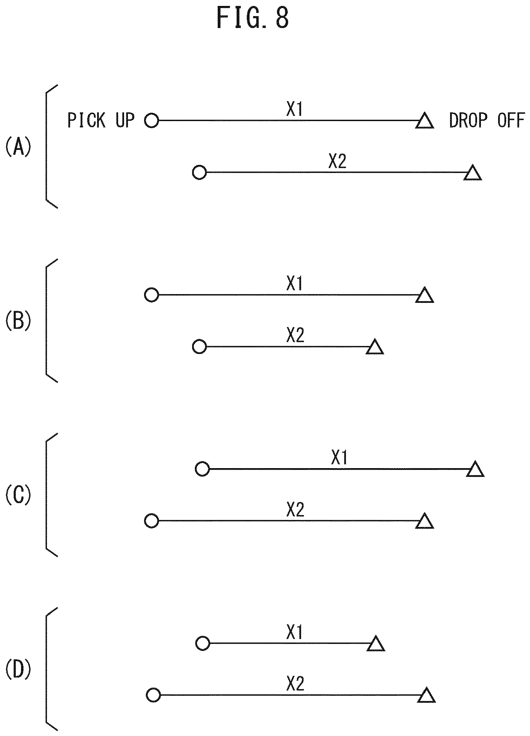

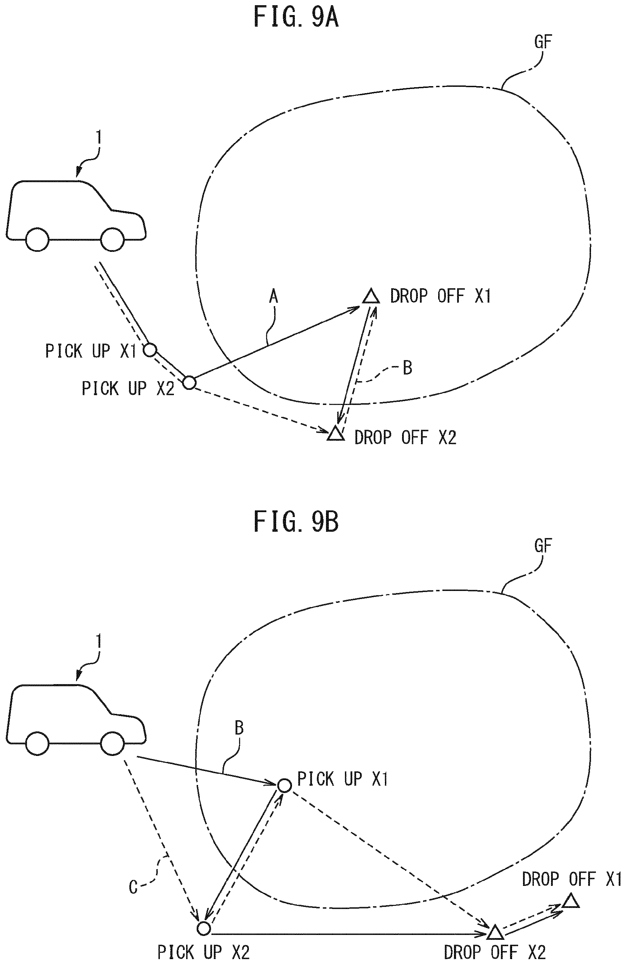

Next, referring to FIG. 8 to FIG. 9B, the problem to be addressed by the present invention will be explained using an example where there are two ridesharing users X1 and X2. Now, when two users X1 and X2 are sharing the vehicle 1, there are four patterns with different pick-up orders and drop-off orders as shown in (A) to (D) of FIG. 8. Note that, in FIG. 8, the circles represent pick-ups, the triangles represent drop-offs, and the periods where the solid lines, which represent users X1 and X2 being in a state of riding between the pick-ups and drop-offs, overlap represent the periods of ridesharing. Specific examples of the stop patterns shown in FIG. 8 are shown in FIG. 9A and FIG. 9B. Note that the vehicle 1 shown in FIG. 1 and the boundary GF shown in FIG. 5 are also illustrated in FIG. 9A and FIG. 9B.

Referring to FIG. 9A and FIG. 9B, the stop pattern (A) of FIG. 8 in which the user X2 is picked up after the user X1 is picked up and the user X2 is dropped off after the user X1 is dropped off is represented by the solid line arrows A in FIG. 9A, and the stop pattern (B) of FIG. 8 in which the user X2 is picked up after the user X1 is picked up and the user X1 is dropped off after the user X2 is dropped off is represented by the broken line arrows B in FIG. 9A. On the other hand, the stop pattern (B) of FIG. 8 in which the user X2 is picked up after the user X1 is picked up and the user X1 is dropped off after the user X2 is dropped off is represented by the solid line arrows B in FIG. 9B, and the stop pattern (C) of FIG. 8 in which the user X1 is picked up after the user X2 is picked up and the user X1 is dropped off after the user X2 is dropped off is represented by the broken line arrows C in FIG. 9B.

Note that FIG. 9A shows a case in which the pick-up stops of the users X1 and X2 are outside the engine restricted zone, the drop-off stop of the user X1 is inside the engine restricted zone, and the drop-off stop of the user X2 is outside the engine restricted zone, while FIG. 9B shows a case in which the pick-up stop of the user X1 is inside the engine restricted zone, the pick-up stop of the user X2 is outside the engine restricted zone, and the drop-off stops of the users X1 and X2 are outside the engine restricted zone. Note that there are actually much more travel route combinations for the stop patterns shown in (A) to (D) of FIG. 8 according to whether the pick-up stops and drop-off stops of the users X1 and X2 are inside the engine restricted zone or are outside the engine restricted zone.

If explaining the object of the present invention using an example where there are two ridesharing users X1 and X2 as in the above, the object of the present is to suggest which order for traveling through the stops of the users X1 and X2 among the stop patterns shown in (A) to (D) of FIG. 8 would be optimal when the pick-up stop of one of the users is insideforthe the engine restricted zone and the pick-up stop of the other of the users is outside the engine restricted zone or when the drop-off stop of one of the users is inside the engine restricted zone and the drop-off stop of the other of the users is outside the engine restricted zone.

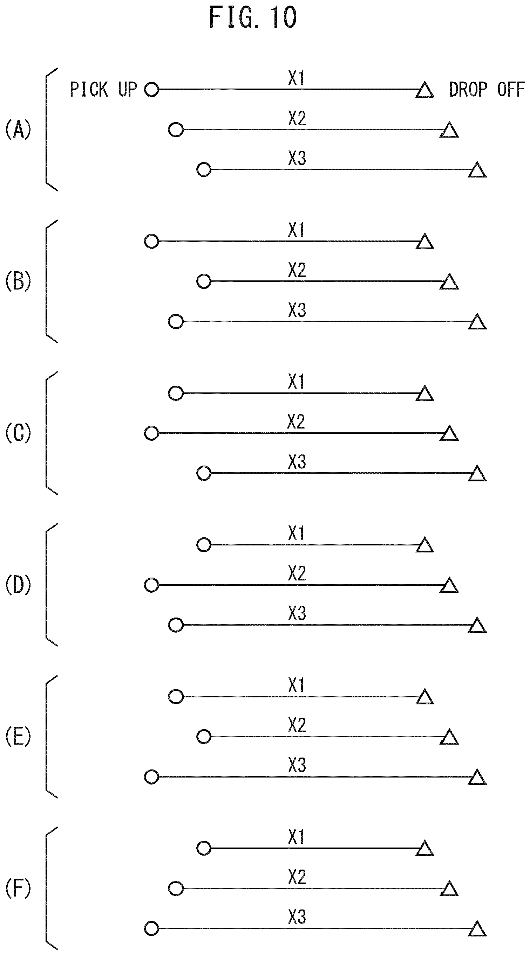

FIG. 10 shows stop patterns for when there are three ridesharing users X1, X2, and X3 and the users are to be dropped off in the order of the users X1, X2, and X3. In this case, there are six stop patterns from (A) to (F), and there are a total of 36 stop patterns when the drop-off orders are changed. In the present invention in this case, which order for traveling through the stops of the users X1, X2 and X3 among these 36 stop patterns would be optimal is suggested.

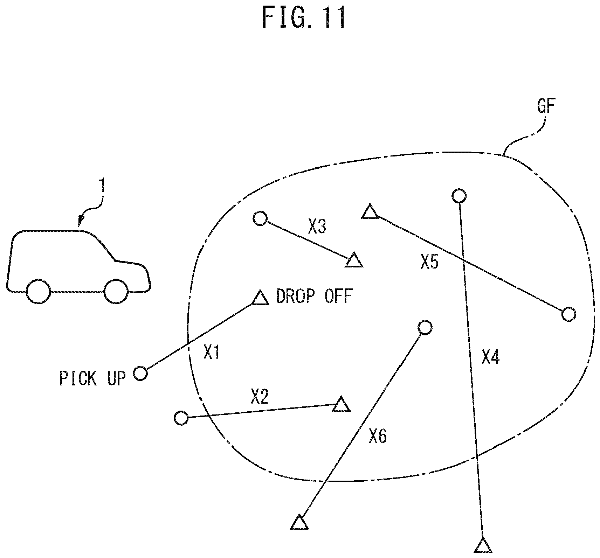

On the other hand, FIG. 11 shows a case in which there are ridesharing requests from a large number of users X1, X2, X3.... Note that the vehicle 1 shown in FIG. 1 and the boundary GF shown in FIG. 5 are illustrated in FIG. 11. Further, in FIG. 11, the circles represent pick-ups, and the triangles represent drop-offs. In the example shown in FIG. 11, route orders for the user stops which would be highly rated for ride fee, travel time, and travel distance when users among a large number of users X1, X2, X3... with ridesharing requests share rides are suggested.

In this regard, when the vehicle 1 has entered the engine restricted zone, since running of the internal combustion engine 20 will be forbidden, it is necessary to stop running the internal combustion engine 20 and power the vehicle 1 with the electric motor 21. However, if the vehicle 1 is powered by the electric motor 21, the vehicle 1 will be unable to travel if the SOC amount of the battery 3 falls below the set lower limit SOCX while the vehicle 1 is traveling in the engine restricted zone. In this case, it is necessary to eliminate, from the user stop route orders to be suggested, route orders by which the vehicle 1 will be predicted to become unable to travel in the engine restricted zone. That is, it is necessary to suggest a route order by which the SOC amount of the battery 3 will not become less than a setting value, e.g., the lower limit SOCX, while the vehicle 1 is traveling in the engine restricted zone when the vehicle 1 enters the engine restricted zone in response to a user request. To this end, it is necessary to predict changes in the SOC amount of the battery 3.

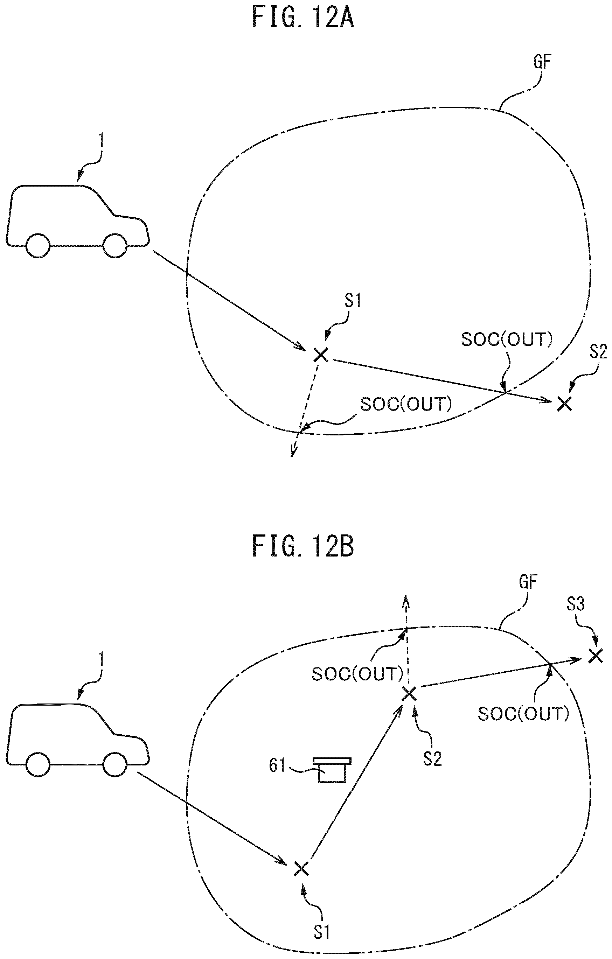

Next, the changes in the SOC amount of the battery 3 at the time the vehicle 1 is traveling in the engine restricted zone will be explained with reference to FIG. 12A to FIG. 13B. Note that the vehicle 1 shown in FIG. 1 and the boundary GF shown in FIG. 5 are also illustrated in FIG. 12A to FIG. 13B. Furthermore, the user stops are represented by X marks in FIG. 12A to FIG. 13B.

The solid line arrows of FIG. 12A represent a case in which the vehicle 1 travels to the user stop S1 in the engine restricted zone, then heads toward the user stop S2 outside the engine restricted zone. As explained above, since running of the internal combustion engine 20 when the vehicle 1 enters the engine restricted zone is forbidden, the SOC amount of the battery when the vehicle 1 enters the engine restricted zone will continue to fall so long as the vehicle 1 is in the engine restricted zone. Accordingly, as shown by the solid line arrows in FIG. 12A, in a case where the vehicle 1 travels to the user stop S1 inside the engine restricted zone, then heads to the user stop S2 outside the engine restricted zone, the vehicle 1 will be unable to travel if the SOC amount SOC(OUT) of the battery at the time the vehicle 1 traveling in the engine restricted zone arrives at the boundary GF falls below the set lower limit SOCX. That is, in this case, it is possible to judge whether the vehicle 1 is able to continue traveling in the engine restricted zone based on the SOC amount SOC(OUT) of the battery at the time the vehicle 1 arrives at the boundary GF.

On the other hand, in FIG. 12A, when the user stop S1 is the last user stop to be traveled to, in the embodiment according to the present invention, the vehicle 1 will head to the outside of the engine restricted zone through the shortest route. The broken line arrow in FIG. 12A represents the travel route of the vehicle 1 at this time. In this case as well, it is possible to judge whether the vehicle 1 will be able to continue traveling in the engine restricted zone based on the SOC amount SOC(OUT) of the battery at the time the vehicle 1 arrives at the boundary GF.

On the other hand, the solid line arrows of FIG. 12B represent a case in which the vehicle 1 travels through the user stops S1 and S2 inside the engine restricted zone, then heads toward the user stop S3 outside the engine restricted zone and the broken line arrow of FIG. 12A represents a case in which the user stop S2 is the last user stop to travel to. Further, FIG. 12B shows a case in which the charging station 61 for charging the battery 3 installed in the vehicle 1 is provided on the route from the user stop S1 to the user stop S2 in the engine restricted zone. In the embodiment according to the present invention, if the charging station 61 is provided on the travel route of the vehicle 1, the battery installed in the vehicle 1 is charged at the charging station 61 when the SOC amount of the battery 3 is a low amount within a fixed range.

In the case shown in FIG. 12B, if the SOC amount of the battery is a low amount within the fixed range when the vehicle 1 arrives at the charging station 61 and the SOC amount SOC(OUT) of the battery at the time the vehicle 1 arrives at the boundary GF would be greater than the set value, e.g., greater than the lower limit SOCX, it is judged that the vehicle 1 would be able to continue traveling in the engine restricted zone.

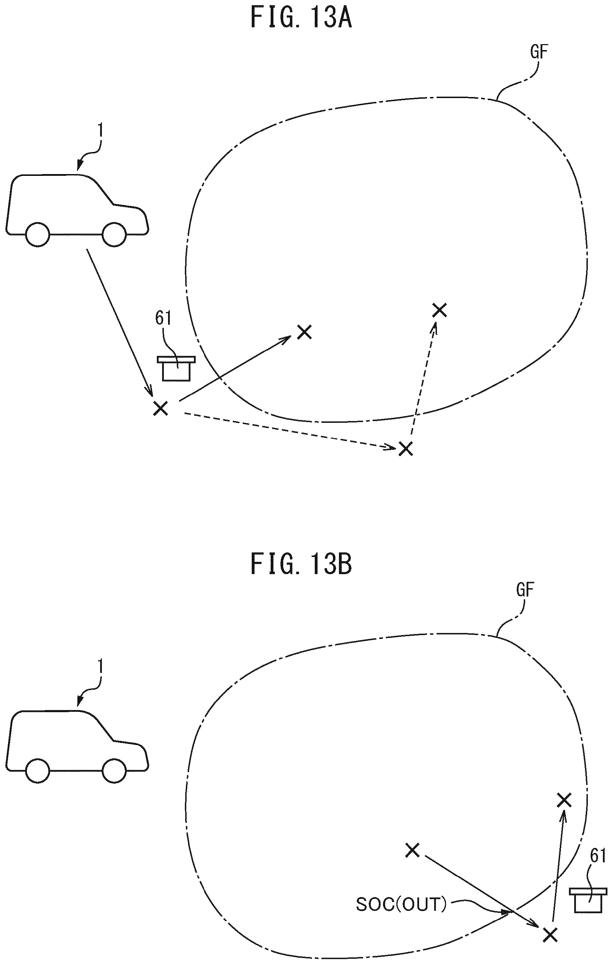

FIG. 13A and FIG. 13B show other typical examples. FIG. 13A, as shown by the arrows, shows a case in which the vehicle 1 travels to a user stop outside the engine restricted zone, then heads toward a user stop in the engine restricted zone. With regards to this example as well, in the embodiment according to the present invention, like in the case represented by the solid line arrows in FIG. 13A, if the charging station 61 is provided on the travel route of the vehicle 1, the battery 3 installed in the vehicle 1 is charged at the charging station 61 when the SOC amount of the battery 3 is a low amount within the fixed range.

On the other hand, FIG. 13B, as indicated by the arrows, shows a case in which the vehicle 1 inside the engine restricted zone travels to a user stop outside the engine restricted zone and then heads toward a user stop inside the engine restricted zone. With regards to this example as well, in an embodiment according to the present invention, as shown in FIG. 13B, if the charging station 61 is provided on the travel route of the vehicle 1, the battery installed in the vehicle 1 is charged at the charging station 61 when the SOC amount of the battery 3 is a low amount within the fixed range. Note that in the case shown in FIG. 13B as well, if the SOC amount SOC(OUT) of the battery 3 at the time the vehicle 1 traveling inside the engine restricted zone arrives at the boundary GF is less than the setting value, e.g., will end up falling below the lower limit SOCX, it is judged that the vehicle 1 will be unable to continue traveling in the engine restricted zone.

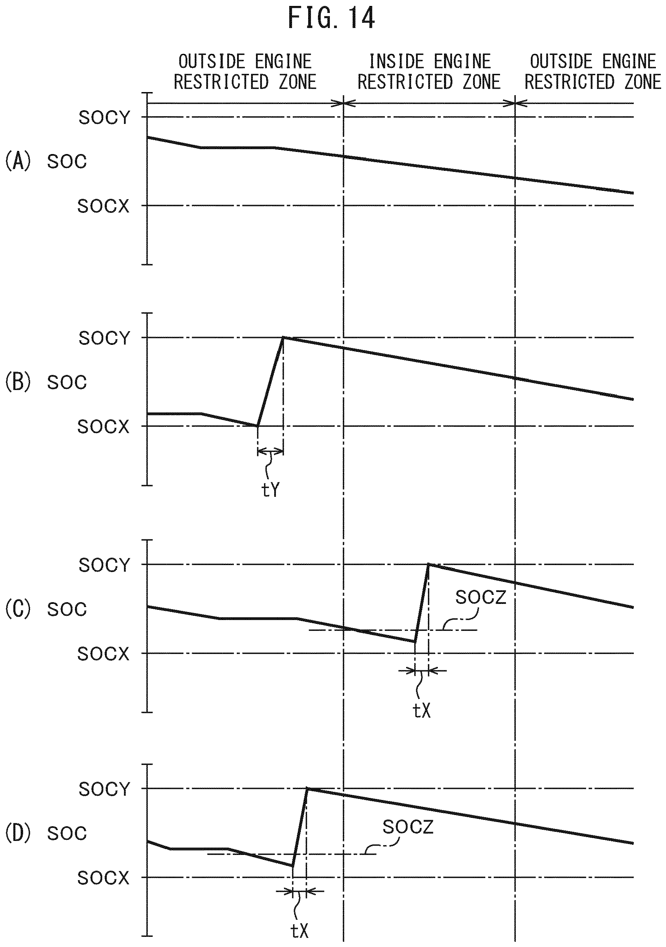

FIG. 14 schematically shows changes in the SOC amount SOC under which it is possible for the vehicle 1 to continue traveling in the engine restricted zone. Referring to FIG. 14, (A) and (B) of FIG. 14 show cases in which as indicated by the solid line arrows or the broken line arrow in FIG. 12A the vehicle 1 exites the engine restricted zone without the battery 3 being charged at the charging station 61. Note that (B) of FIG. 14 shows a case in which the SOC amount SOC drops to the lower limit SOCX slightly before the vehicle 1 enters the engine restricted zone and the battery is accordingly charged by the internal combustion engine 20 so that the SOC amount SOC is raised to the upper limit SOCY. The charging time for the internal combustion engine 20 to charge the battery at this time is indicated by tY.

On the other hand, (C) of FIG. 14 shows a case in which, as shown in FIG. 12B, the battery 3 installed in the vehicle 1 is charged at the charging station 61 while the vehicle 1 is traveling in the engine restricted zone and (D) of FIG. 14 shows a case in which, like in the case represented by the solid line arrows of FIG. 13A or as shown in FIG. 13B, the battery 3 installed in the vehicle 1 is charged at the charging station 61 slightly before the vehicle 1 enters the engine restricted zone. Note that the charging time for the charging station 61 to charge the battery 3 is indicated by tX.

Note that in the embodiment according to the present invention, charging of the battery 3 at the charging station 61 is carried out while the SOC amount SOC is a low amount within the fixed range, e.g., between a setting value slightly larger than the lower limit SOCX and the lower limit SOCX. Note that the charging efficiency of the battery 3 by the charging station 61 is higher relative to the charging efficiency of the battery 3 by the internal combustion engine 20, and it is accordingly preferable for the battery 3 to be charged at the charging station 61 when possible. Accordingly, in the embodiment according to the present invention, if the charging station 61 is provided on the travel route of the vehicle 1, the battery 3 installed in the vehicle 1 is charged at the charging station 61 when the SOC amount of the battery 3 is a low amount within the fixed range.

Now, as explained above, when the vehicle 1 enters the engine restricted zone in response to a user request, it is necessary to suggest a route order by which the SOC amount of the battery 3 will not become less than the setting value, e.g., the lower limit SOCX, while the vehicle 1 is traveling in the engine restricted zone. Therefore, it is necessary to predict how the SOC amount of the battery 3 will change while the vehicle 1 is traveling in the engine restricted zone. Therefore, next, a method for calculating a predicted value of the reduction in the SOC amount that occurs when the vehicle 1 travels in the EV mode in a certain travel area without the battery 3 being charged, i.e., a predicted value of the fallen SOC amount $\Delta$SOC will be explained. Note that this certain travel area will be referred to as a declining SOC travel area below.

The energy EX consumed while the vehicle 1 is traveling in the declining SOC travel area is, as indicated by the following equation, the sum of the loss from friction Ef, change in potential energy $\Delta$Eh, and change in kinetic energy $\Delta$Ev during the period in which the vehicle 1 is traveling in the declining SOC travel area.

$$EX = Ef + \Delta Eh + \Delta Ev$$

Now, the loss from friction Ef is the integral of loss from instantaneous friction "f" during the period in which the vehicle 1 is traveling in the declining SOC travel area. Here, if "v" is the vehicle speed, the loss from instantaneous friction "f" is expressed by a quadratic equation of the vehicle speed "v", as shown by the following equation.

$$f = av^2 + bv + c \ (\text{"a"}, \text{"b"}, \text{and "c" are constants})$$

On the other hand, the change in potential energy $\Delta$Eh is expressed by the difference in elevation $\Delta$h between the position at which the vehicle 1 enters the declining SOC travel area and the position at which the vehicle 1 leaves the declining SOC travel area, as shown by the following equation.

$\Delta Eh = mg\Delta h$ ("m" is the mass of the vehicle 1, and "g" is the gravitational acceleration)

Further, if the vehicle speed at which the vehicle 1 enters the declining SOC travel area is v0 and the vehicle speed at which the vehicle 1 exits the declining SOC travel area is "v", the change in kinetic energy $\Delta$Ev is expressed by the following equation.

$$\Delta Ev = 1/2 \cdot m(v^2 - v_0{}^2)$$

On the other hand, if the conversion efficiency by which the output of the battery 3 is converted to mechanical output is approximated by the constant $\mu$, the energy $\Delta$Eb removed from the battery 3 while the vehicle 1 is traveling in the declining SOC travel area will be like in the following equation.

$$\Delta Eb = EX/\mu$$

On the other hand, if the charge capacity of the battery 3 is Q and the output voltage of the battery 3 is approximated by the constant V, the energy Eq of the battery 3 will be like in the following equation.

$$Eq=QV$$

Accordingly, the fallen SOC amount ∆SOC is expressed by the following equation.

$$\Delta SOC=\Delta Eb/Eq$$

In this manner, the fallen SOC amount ∆SOC is calculated. Note that to calculate the fallen SOC amount ∆SOC, the difference in elevation ∆h is calculated based on the map data stored in the map data storage device 10. On the other hand, the vehicle speed "v" is the speed limit for the travel route found by the navigation device 11.

Note that strictly speaking, since the constant μ of the conversion efficiency is dependent on the drive output and vehicle speed "v" of the vehicle 1, ∆Eb becomes a function of the drive output and vehicle speed "v" of the vehicle 1, and since the output voltage V of the battery 3 is dependent on the SOC amount, Eq becomes a function of the SOC amount. Accordingly, to precisely determine the fallen SOC amount ∆SOC, the drive output, vehicle speed "v", and change in the SOC amount of the vehicle 1 are taken in consideration to calculate the fallen SOC amount ∆SOC. Note that an explanation of the method of calculation of the fallen SOC amount ∆SOC to precisely determine the fallen SOC amount ∆SOC will be omitted.

If the vehicle 1 is traveling in the EV mode in the engine restricted zone without the battery 3 being charged, the SOC amount SOC(OT) of the battery at the time the vehicle 1 arrives at the boundary GF can be predicted using the calculated fallen SOC amount ∆SOC explained above. On the other hand, if the battery 3 is charged on the travel route of the vehicle 1, the SOC amount immediately before charging of the battery 3 as well as the SOC amount after charging of the battery 3 can also be predicted using the fallen SOC amount ∆SOC explained above.

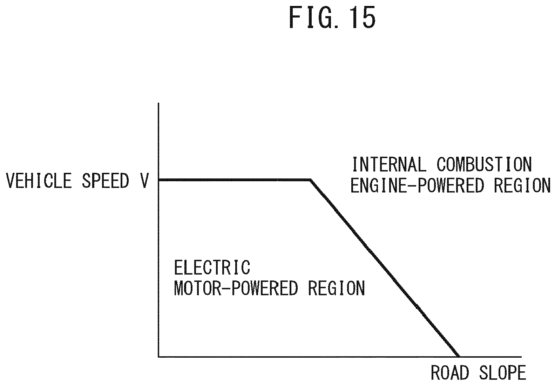

On the other hand, when the vehicle 1 is traveling outside the engine restricted zone, the vehicle 1 will sometimes be traveling in the HV mode and be powered by the internal combustion engine 20. In the embodiment according to the present invention, the electric power of the battery 3 will not be consumed in the case of travel in the HV mode, and accordingly, the SOC amount will not drop. On the other hand, the region in which the vehicle 1 is powered by the internal combustion engine 20 is determined from the vehicle speed "v" and the road gradient, as shown in FIG. 15 for example. In this case, the road gradient can be acquired from travel route information retrieved by the navigation device 11. Accordingly, the SOC amount at the time when the vehicle 1 is traveling outside the engine restricted zone can also be predicted using the fallen SOC amount ∆SOC explained above.

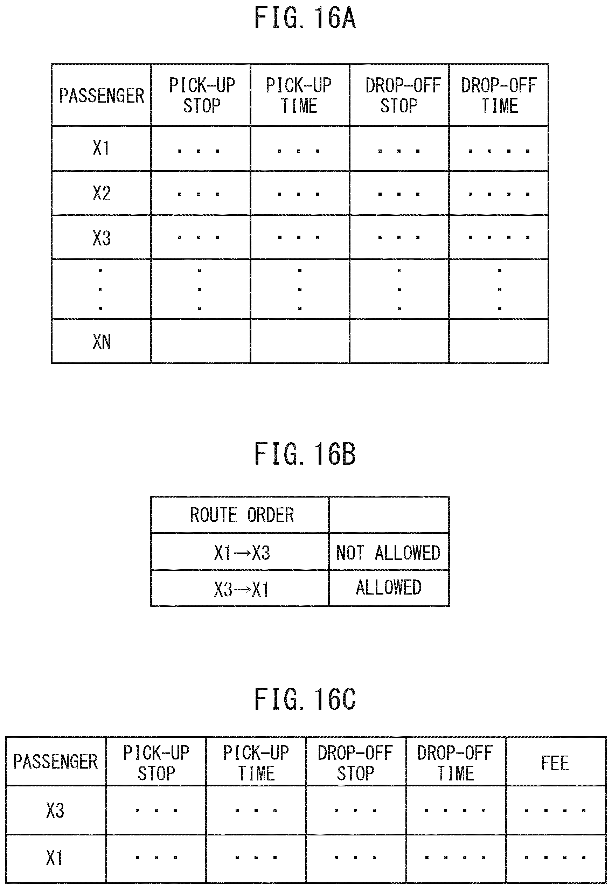

Now, in the embodiment according to the present invention, as explained above, the name, desired pick-up stop, desired pick-up time, desired drop-off stop, and desired drop-off time of a user are registered in the booking list in the server 30. An example of this booking list is shown in FIG. 16A. Note that FIG. 16A shows a case in which the users X1 to XN desire to share a ride. In the server 30, a matching system for matching the users depending on whether or not ridesharing is possible is used to retrieve possible ridesharing users. If possible ridesharing users are retrieved, it is judged whether the SOC amount of the battery 3 in each route order of the user stops will become less than the setting value, e.g., the lower limit SOCX, using the fallen SOC amount ∆SOC explained above, and the judgment results are displayed. FIG. 16B shows a case in which the user X1 and the user X3 are retrieved as possible ridesharing users and the route order with an SOC amount of the battery 3 that will not become less than the setting value, e.g., the lower limit SOCX, is the route order from the user X3 to the user X1.

Note that it is possible to access the booking list in the server 30 from each vehicle 1 used in the ridesharing service as explained above. Accordingly, it is possible to construct a ridesharing system in which the driver of the vehicle 1 used in the ridesharing service is able to compare and review the desired pick-up stops, desired pick-up times, desired drop-off stops, and desired drop-off times of the users from the booking list and select possible ridesharing users. In this case, it is judged at the server 30 whether the SOC amount of the battery 3 in each route order of stops selected by the driver will become less than the setting value, e.g., less than the lower limit SOCX, using the fallen SOC amount ∆SOC explained above, and judgment results like those shown in FIG. 16B are displayed.

When judgment results like those shown in FIG. 16B are displayed, the pick-up stops, pick-up times, drop-off stops, and drop-off times of the possible ridesharing users are displayed on the screens of the portable terminals 60 of those users. In the example shown in FIG. 16C, the pick-up stops, pick-up times, drop-off stops, and drop-off times of possible ridesharing users X3 and X1 are displayed on the screens of the portable terminals 60 of those users. Further, in the example shown in FIG. 16C, the fee demanded by the driver of the vehicle 1 from possible ridesharing users X3 and X1 is displayed on the screens of the portable terminals 60 of the users X3 and X1. Note that there are also cases in which the fee is a fixed fee. If the users X3 and X1 reply that they desire to share the vehicle 1 from which the notification was received, the driver of the vehicle 1 begins driving to enable the users X3 and X1 to share rides. Note that it is also possible to construct a ridesharing system in which the users X3 and X1 suggest their desired fees. In this case, the driver of the vehicle 1 would judge whether to accept the ridesharing requests.

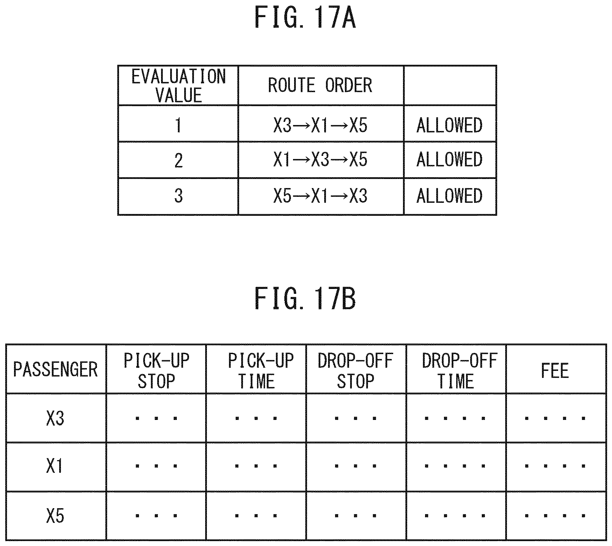

FIG. 17A and FIG. 17B show another embodiment of the ridesharing system shown in FIG. 16A to FIG. 16C. At the server 30 of the ridesharing system shown in FIG. 17A and FIG. 17B, route orders in which the SOC amount of the battery will not become less than the setting value, e.g., the lower limit SOCX, among a plurality of route orders are suggested in descending order of evaluation value. In this case, in the example shown in FIG. 17A, the user route order of X3, X1, and X5 has the highest evaluation value, the user route order of X1, X3, and X5 has the next highest evaluation value, and the user route order of X5, X1, and X3 has the next highest evaluation value. The evaluation value is the total ride fee demanded from the users, the vehicle travel time taken up by driving for all the users, or the vehicle travel distance for driving for all the users.

In this case, the pick-up stops, pick-up times, drop-off stops, and drop-off times of the possible ridesharing users X3, X1, and X5 when the vehicle 1 is made to travel in the route order with the highest evaluation value are displayed to the users X3, X1, and X5 on the screens of the portable terminals 60 of the users X3, X1, and X5. In the example shown in FIG. 17B, the fee demanded by the driver of the vehicle 1 from the possible ridesharing users X3, X1, X5 is displayed on the screens of the portable terminals 60 of the users X3, X1, and X5. If the users X3, X1, and X5 reply that they desire to share the vehicle 1 from which the notification was received, the driver of the vehicle 1 begins driving so as to enable the users X3, X1, and X5 to share rides.

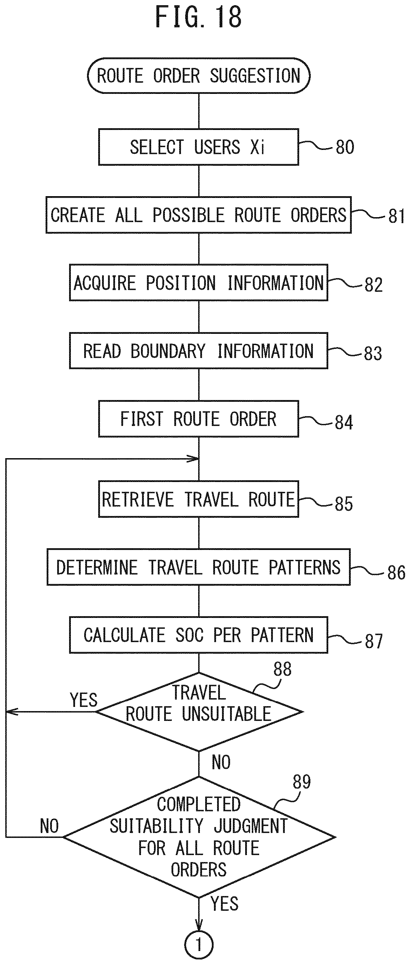

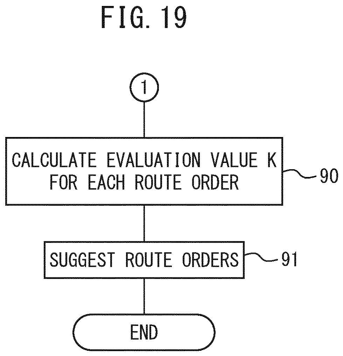

Next, referring to FIG. 18 and FIG. 19, the route order suggestion routine will be explained. This suggestion routine is executed in the electronic control unit 31 of the server 30. Referring to FIG. 18 and FIG. 19, first, at step 80, a plurality of possible ridesharing users Xi are selected by the matching system or the driver of the vehicle 1 from the booking list in the server 30 like that shown in FIG. 16A. Next, at step 81, all possible ridesharing route orders are created. Next, at step 82, the current position of the vehicle 1 is acquired by the navigation device 11 based on reception signals received by the GPS receiver device 9 and map data stored in the map data storage device 10. Next, at step 83, information relating to the boundary GF between the inside the engine restricted zone and the outside of the engine restricted zone such as the road positions Kd ,Ke, Kf, and Kg on the boundary GF is read. In this case, if the information relating to the boundary GF is stored in the map data storage device 10, the information relating to the boundary GF stored in the map data storage device 10 is read, while if the information relating to the boundary GF is stored in the server 30, the information relating to the boundary GF transmitted from the server 30 to the vehicle 1 is read.

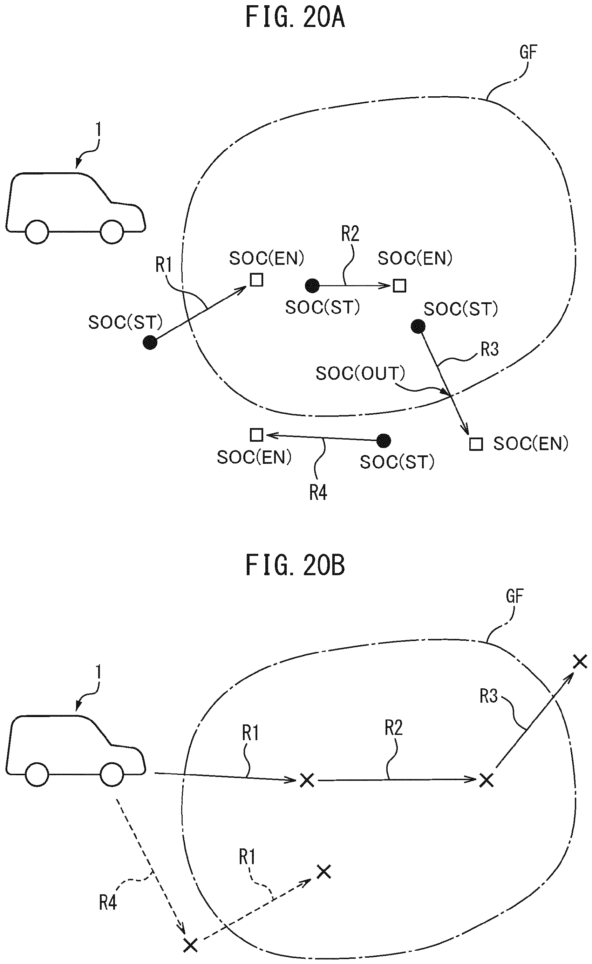

Next, at step 84, first, any one route order (referred to as "the first route order") is selected from all of the possible ridesharing route orders. Next, at step 85, a travel route in which the vehicle 1 travels in the first route order is searched for by the navigation device 11. Next, at step 86, travel route patterns are determined for the retrieved travel route, then at step 87, the SOC amount SOC for each travel route pattern is calculated, and it is judged whether the retrieved travel route is feasible or not feasible. Here, the explanations for step 88 onwards will be explained later. The travel route patterns determined at step 86 and the SOC amount SOC calculation at step 87 will be explained first with reference to FIG. 20A to FIG. 25.

First, referring to FIG. 20A and FIG. 20B, the SOC amount SOC calculation technique used in the embodiment according to the present invention will be explained. Note that, FIG. 20A and FIG. 20B illustrate the vehicle 1 shown in FIG. 1 and the boundary GF shown in FIG. 5. In the embodiment according to the present invention, as shown in FIG. 20A, the travel route patterns for the vehicle 1 are classified into the four patterns of a travel route pattern R1 heading inside the engine restricted zone from outside the engine restricted zone, a travel route pattern R2 heading inside the engine restricted zone from inside the engine restricted zone, a travel route pattern R3 heading inside the engine restricted zone from outside the engine restricted zone, and a travel route pattern R4 heading outside the engine restricted zone from outside the engine restricted zone. An SOC amount SOC calculation routine is prepared for each travel route pattern R1, R2, R3, and R4. Note that the black circles in FIG. 20A represent the start locations of the travel route patterns, and the SOC amounts at the start locations are made the starting values SOC(ST). On the other hand, the squares in FIG. 20A represent the end points of the travel route patterns, and the SOC amounts at the end points are made the ending values SOC(EN).

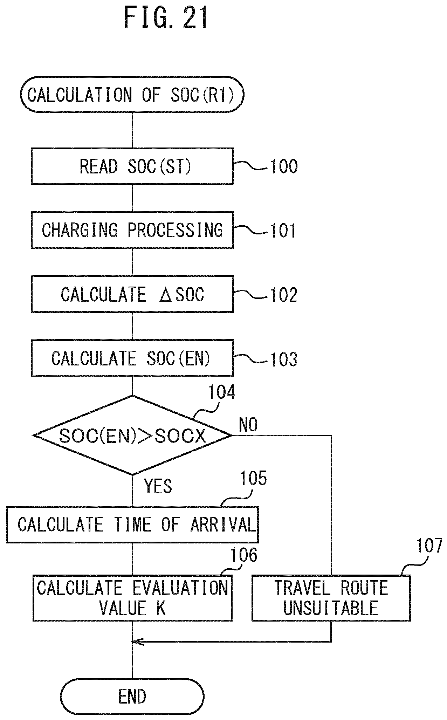

Now, if, for example, the travel route retrieved at step 85 of FIG. 18 is a travel route such as in FIG. 20B connecting the user stops represented by X marks with solid line arrows, the first travel route pattern determined at step 86 of FIG. 18 is the travel route pattern R1, then the travel route pattern R2, and then the travel route pattern R3. Then, at step 87 of FIG. 18, the SOC amounts at the time the vehicle 1 is traveling through the portions represented by the travel route patterns are calculated using the SOC amount SOC calculation routines prepared for the travel route patterns. FIG. 21 to FIG. 25 show the SOC amount SOC calculation routines prepared for the travel route patterns R1, R2, R3, and R4.

First, referring to the SOC amount SOC(R1) calculation routine shown in FIG. 21 for the travel route pattern R1, the starting value SOC(ST) for the SOC amount is read at step 100. The starting value SOC(ST) for the SOC amount differs depending on the situation. For example, if the vehicle 1 is at the position indicated in FIG. 20B and will travel along the solid line arrows, the starting value SOC(ST) for the SOC amount is the current SOC amount SOC, while if the vehicle 1 is at the position indicated in FIG. 20B and will travel along the broken line arrows, the starting value SOC(ST) for the SOC amount is the ending value SOC(EN) calculated by the SOC amount SOC calculation routine for the travel route pattern R4.

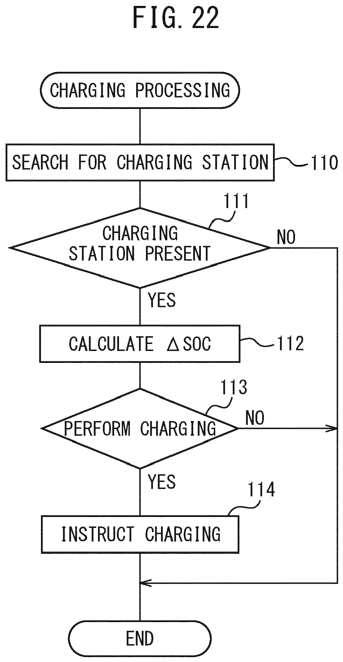

Next, at step 101, the charging routine shown in FIG. 22 is executed. Referring to FIG. 22, at step 110, the charging station 61 in the surroundings is retrieved based on reception signals received by the GPS receiver device 9 and map data stored in the map data storage device 10. Next, at step 111, it is judged whether the charging station 61 is on the travel route. When it is judged that the charging station 61 is on the travel route of the vehicle 1, the routine proceeds to step 112 where the calculation equation explained above is used to calculate the fallen SOC amount ΔSOC up to arrival at the charging station 61. Next, at step 113, it is judged whether the SOC amount of the battery 3 at the time of arrival of the vehicle 1 at the charging station 61 is a low amount within the fixed range, i.e., whether charging should be performed, based on the fallen SOC amount ΔSOC and the starting value SOC(ST) of the SOC amount. When the SOC amount of the battery 3 at the time of arrival of the vehicle 1 at the charging station 61 is a low amount within the fixed range, i.e., when it is judged that charging should be performed, the routine proceeds to step 114 where an instruction to the driver of the vehicle 1 to perform charging at the charging station 61 is displayed. At this time, the vehicle 1 is stopped temporarily at the charging station 61 and the battery is charged.

When charging ends, the routine proceeds to step 102 of FIG. 21 where the fallen SOC amount ΔSOC up to the end point is calculated using the calculation equation explained above. Next, at step 103, the SOC amount at the end point, i.e., the ending value SOC(EN), is calculated based on the fallen SOC amount ΔSOC and the starting value SOC(ST) of the SOC amount. In this case, when charging is performed at the charging station 61, the starting value SOC(ST) of the SOC is the upper limit SOCY. Next, at step 104, it is judged whether the ending value SOC(EN) is greater than, for example, the lower limit SOCX. When it is judged that the ending value SOC(EN) is greater than the lower limit SOCX, the routine proceeds to step 105 where the predicted time of arrival at the end point is calculated. Note that when charging is performed at the charging station 61, the time necessary for charging tX (FIG. 14) is added in the calculation of the predicted time of arrival at the end point.

Next, at step 106, the evaluation value K is calculated. The evaluation value K is the predicted travel time or predicted travel distance when the vehicle 1 travels from the start location to the end point in travel route pattern R1. Note that the fee can also be used as the evaluation value K. On the other hand, when it is judged at step 104 that the ending value SOC(EN) is not greater than the lower limit SOCX, the routine proceeds to step 107 where it is judged that the travel route of the vehicle 1 is not feasible. That is, at this time, it is predicted that the vehicle 1 will become unable to travel when traveling in the engine restricted zone, and accordingly, a notification will be made in a manner like that shown in FIG. 16 B to indicate that the route order including the travel route for which the calculation of the SOC amount SOC(R1) calculation routine is being performed is not allowable.

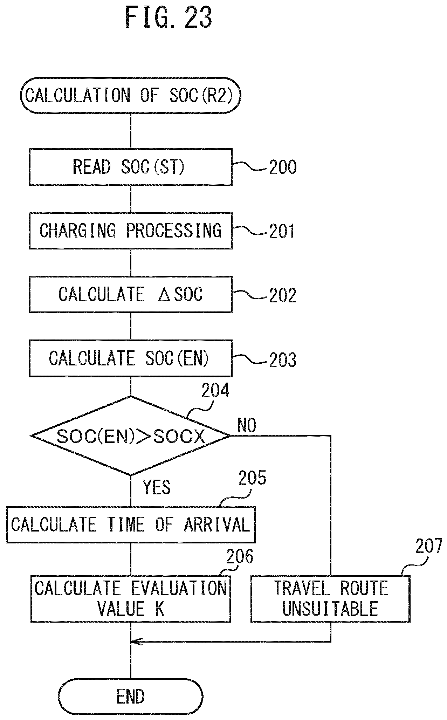

Next, referring to the SOC amount SOC(R2) calculation routine shown in FIG. 23 for the travel route pattern R2, the starting value SOC(ST) of the SOC amount is read at step 200. Next, at step 201, the charging routine shown in FIG. 22 is executed. Next, at step 202, the fallen SOC amount ΔSOC up to the end point is calculated using the calculation equation explained above. Next, at step 203, the SOC amount at the end point, i.e., the ending value SOC(EN), is calculated based on the fallen SOC amount ΔSOC and the starting value SOC(ST) of the SOC amount. In this case, when charging is performed at the charging station 61, the starting value SOC(ST) of the SOC amount is the upper limit SOCY. Next, at step 204, it is judged whether the ending value SOC(EN) is greater than, for example, the lower limit SOCX. When it is judged that the ending value SOC(EN) is greater than the lower limit SOCX, the routine proceeds to step 205 where the predicted time of arrival at the end point is calculated.

Next, at step 206, the evaluation value K is calculated. The evaluation value K is the predicted travel time or predicted travel distance when the vehicle 1 travels from the start location to the end point in the travel route pattern R2. Note that the fee can also be used as the evaluation value K. On the other hand, when it is judged at step 204 that the ending value SOC(EN) is not greater than the lower limit SOCX, the routine proceeds to step 207 where it is judged that the travel route of the vehicle 1 is not feasible. That is, at this time, it is predicted that the vehicle 1 will become unable to travel when traveling in the engine restricted zone, and accordingly, a notification will be made in a manner like that shown in FIG. 16 B to indicate that the route order including the travel route for which the calculation of the SOC amount SOC(R2) calculation routine is being performed is not allowable.

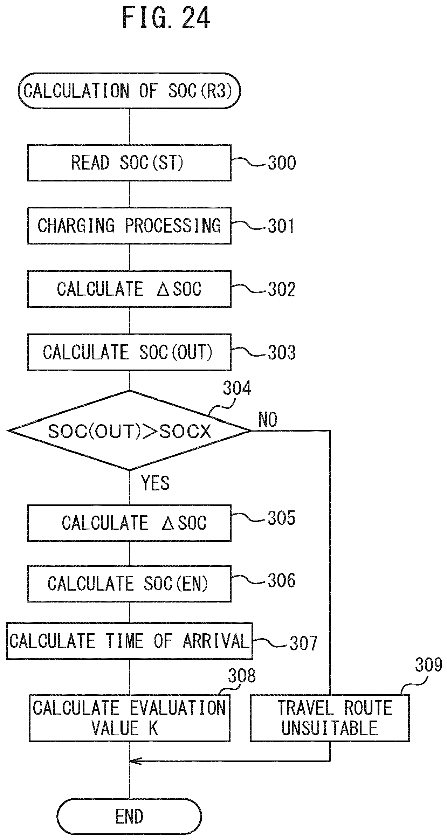

Next, referring to the SOC amount SOC(R3) calculation routine shown in FIG. 24 for the travel route pattern R3, the starting value SOC(ST) of the SOC amount is read at step 300. Next, at step 301, the charging routine shown in FIG. 22 is performed. Next, at step 302, the fallen SOC amount ΔSOC up to the arrival of the vehicle 1 at the boundary GF is calculated using the calculation equation explained above. Next, at step 303, the SOC amount at the time of arrival of the vehicle 1 at the boundary GF is calculated based on the fallen SOC amount ΔSOC and the starting value SOC(ST) of the SOC amount. In this case, when charging is performed at the charging station 61, the starting value SOC(ST) of the SOC amount is the upper limit SOCY. Next, at step 304, it is judged whether the SOC amount SOC(OUT) at the time of arrival of the vehicle 1 at the boundary GF is greater than, for example, the lower limit SOCX. When it is judged that the SOC amount SOC(OUT) is greater than the lower limit SOCX, the routine proceeds to step 305.

At step 305, when there is a next stop to travel to, the fallen SOC amount ΔSOC up to the end point is calculated using the calculation equation explained above, then at step 306, the SOC amount at the end point, i.e., the ending value SOC(EN), is calculated. Next, the routine proceeds to step 307 where the predicted time of arrival at the end point is calculated. Note that when there is no next stop to travel to, i.e., when the vehicle 1 simply exits the boundary GF as shown by the broken lines in FIG. 12A and FIG. 12B, the boundary GF is the end point, and the time of arrival at the boundary GF is calculated at step 307.

Next, at step 308, the evaluation value K is calculated. The evaluation value K is the predicted travel time or predicted travel distance when the vehicle 1 travels from the start location to the end point in the travel route pattern R3. Note that when there is no next stop to travel to, the boundary GF is the end point. On the other hand, when it is judged at step 304 that the SOC amount SOC(OUT) is not greater than the lower limit SOCX, the routine proceeds to step 309 where it is judged that the travel route of the vehicle 1 is not feasible. That is, at this time, it is predicted that the vehicle 1 will become unable to travel when traveling in the engine restricted zone, and accordingly, a notification will be made in a manner like that shown in FIG. 16 B to indicate that the route order including the travel route for which the calculation of the SOC amount SOC(R3) calculation routine is being performed is not allowable.

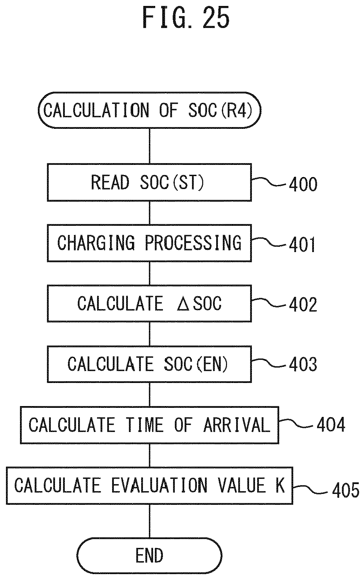

Next, referring to the SOC amount SOC(R4) calculation routine shown in FIG. 25 for the travel route pattern R4, the starting value SOC(ST) of the SOC amount is read at step 400. Next, at step 401, the charging routine shown in FIG. 22 is performed. Next, at step 402, the fallen SOC amount ΔSOC up to the end point is calculated using the calculation equation explained above. Next, at step 403, the SOC amount at the end point, i.e., the ending value SOC(EN), is calculated based on the fallen SOC amount ΔSOC and the starting value SOC(ST) of the SOC amount. In this case, when charging is performed at the charging station 61, the starting value SOC(ST) of the SOC amount is the upper limit SOCY. Next, at step 404, the predicted time of arrival at the end point is calculated. Next, at step 405, the evaluation value K is calculated. The evaluation value K is the predicted travel time or predicted travel distance when the vehicle 1 travels from the start location to the end point in the travel route pattern R4.

Returning to FIG. 18 once again, at step 87, as explained above, the SOC amount SOC for each travel route pattern is calculated, and it is judged whether the retrieved travel route is feasible or not feasible. Next, at step 88, it is judged whether the retrieved travel route was judged to be not feasible in each of the SOC amount SOC calculation routines of step 87. When it is judged that the retrieved travel route is not feasible in each of the SOC amount SOC calculation routines, the routine returns to step 85 where the SOC amount SOC for each travel route pattern in the next possible ridesharing route order is calculated, and it is judged whether the retrieved travel route is feasible or not feasible.

On the other hand, when the retrieved travel route was not judged at step 88 to be not feasible in each of the SOC amount SOC calculation routines, the routine proceeds to step 89 where it is judged whether the judgment operation of judging whether a travel route is not feasible is completed for all of the possible ridesharing route orders. When the judgment operation of judging whether a travel route is not feasible is not completed for all possible ridesharing route orders, the routine returns to step 85 where the SOC amount SOC for each travel route pattern is calculated for the next possible ridesharing route order and it is judged whether the retrieved travel route is feasible or not feasible. On the other hand, when the judgment operation of judging whether travel route is not feasible is completed for all possible ridesharing route orders, the routine proceeds to step 90.

At step 90, the evaluation value K for each route order judged to be feasible is calculated. The evaluation value K is the total of the evaluation values K calculated in the SOC amount SOC calculation routines for the travel route patterns determined for the route order. Next, at step 91, the route orders are suggested. In this case, there are various ways to suggest the route orders depending on how the ridesharing system is constructed. For example, as shown in FIG. 16B and FIG. 16C, the possible ridesharing route orders may simply be suggested, and as shown in FIG. 17A and FIG. 17B, the possible ridesharing route orders may be suggested in descending order of evaluation value.

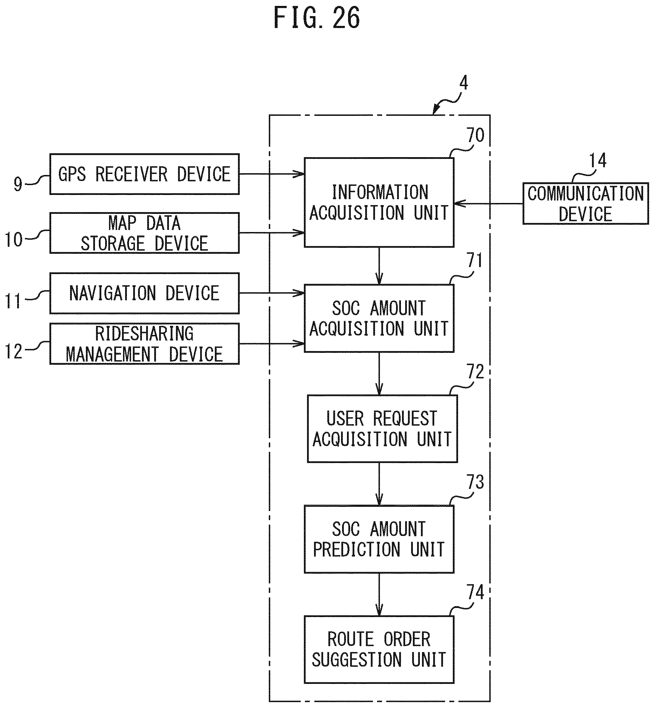

In this way, in the embodiment according to the present invention, as shown in the view of the configuration of functions of FIG. 26, in a ridesharing management system which enables a plurality of users using a ridesharing service to share the vehicle 1 as passengers, wherein the vehicle 1 is comprised of a hybrid vehicle which is driven solely by the electric motor 21 or by both of the electric motor 21 and the internal combustion engine 20, and the boundary GF is established between the inside of the engine restricted zone in which running of the internal combustion engine 20 is restricted and the outside of the engine restricted zone, there is provided with an information acquisition unit 70 which acquires position information for the vehicle 1 and information relating to the boundary GF, a navigation device 11 for searching for a travel route to a destination for the vehicle 1, an SOC amount acquisition unit 71 which acquires the SOC amount of the battery 3 as the source of supply of electric power to the electric motor 21, a user request acquisition unit 72 which acquires requests for pick-ups and drop-offs from the users, an SOC amount prediction unit 73 which predicts whether the SOC amount of the battery 3 will become less than the setting value during travel in the engine restricted zone based on the search results by the navigation device 11 and acquisition results of the information acquisition unit 70, SOC amount acquisition unit 71, and user request acquisition unit 72 if traveling through a stop in the engine restricted zone and a stop outside the engine restricted zone due to a pick-up request or drop-off request from the user, and a route order suggestion unit 74 which suggests, as a route order for stops, a route order in which the SOC amount of the battery 3 will not become less than the setting value during travel in the engine restricted zone based on the prediction results of the SOC amount prediction unit 73.

In this case, in the embodiment according to the present invention, a fallen SOC amount calculation unit is provided to calculate the fallen SOC amount, i.e, the SOC amount which falls when the vehicle is traveling along the travel route retrieved by the navigation device 11, and whether the SOC amount of the battery 3 during travel in the engine restricted zone will be less than the setting value is predicted by the SOC amount prediction unit 73 using the fallen SOC amount calculated by this fallen SOC amount calculation unit.

Further, in the embodiment according to the present invention, the route orders for stops are constituted by a first route order traveling to a stop outside the engine restricted zone, then heading toward a stop in the engine restricted zone and a second route order traveling to a stop in the engine restricted zone, then heading toward a stop outside the engine restricted zone and when it is predicted by the SOC amount prediction unit 73 that the SOC amount of the battery 3 will become less than the setting value during travel in the engine restricted zone for one of the route orders for the stops among the first route order and second route order and that the SOC amount of the battery 3 during travel in the engine restricted zone will not become less than the setting value for the other of the route orders, the other route order is suggested by the route order suggestion unit 74 as a route order for the stops.

In this case, in the embodiment according to the present invention, the route orders for the stops are constituted by a first route order traveling to a stop outside the engine restricted zone, then heading toward a stop in the engine restricted zone and a second route order traveling to a stop in the engine restricted zone, then heading toward a stop outside the engine restricted zone, an evaluation value calculation unit is provided to calculate evaluation values at the time the vehicle 1 travels according to these route orders, and when it is predicted by the SOC amount prediction unit 73 that the SOC amount of the battery 3 during travel in the engine restricted zone will become less than the setting value for either of the first route order and second route order of the route orders of the stops, whichever of the first route order and second route order has the higher evaluation value is suggested by the route order suggestion unit 74 as a route order for the stops.

On the other hand, in the embodiment according to the present invention, a route order creation unit is provided to create all possible route orders among route orders traveling through a plurality of stops among stops including stops in the engine restricted zone and stops outside the engine restricted zone, and route orders among all of the route orders by which it is predicted by the SOC amount prediction unit 73 that the SOC amount of the battery 3 during travel in the engine restricted zone will not become less than the setting value are suggested by the route order suggestion unit 74. In this case, in the embodiment according to the present invention, an evaluation value calculation unit is provided to calculate an evaluation value for each route order at the time when the vehicle 1 travels according to the route order for the route orders by which it is predicted by the SOC amount prediction unit 73 that the SOC amount of the battery 3 during travel in the engine restricted zone will not become less than the setting value, and the route orders by which it is predicted by the SOC amount prediction unit 73 that the SOC amount of the battery 3 during travel in the engine restricted zone will not become less than the setting value are suggested in descending order of evaluation value by the route order suggestion unit 74.

Furthermore, in the embodiment according to the present invention, at least one item among a ride fee demanded from a user, a travel time of the vehicle 1 for driving for the users, and a travel distance of the vehicle 1 for driving for the users is used as the evaluation value explained above. Further, in the embodiment according to the present invention, a charging station searching unit is provided to search for the position of the charging station 61 for charging the battery 3 installed in the vehicle 1, and when there is a charging station 61 on the travel route at the time the vehicle 1 travels according to the route order for the stops, an instruction to charge the battery 3 installed in the vehicle 1 at the charging station 61 is issued.

**Claims**

1. A ridesharing management system which enables a plurality of users using a ridesharing service to share a vehicle as passengers, wherein

   said vehicle is comprised of a hybrid vehicle which is powered solely by an electric motor or by both of the electric motor and an internal combustion engine,
   a boundary is established between an inside of an engine restricted zone in which running of the internal combustion engine is restricted and an outside of the engine restricted zone, and
   said ridesharing management system comprises:

   an information acquisition unit which acquires position information for said vehicle and information relating to the boundary,
a navigation device for searching for a travel route of said vehicle to a destination,
an SOC amount acquisition unit which acquires an SOC amount of a battery as a source of supply of electric power to the electric motor,
a user request acquisition unit which acquires requests for pick-ups and drop-offs from the users,
an SOC amount prediction unit which predicts whether the SOC amount of the battery will become less than a setting value during travel in the engine restricted zone based on search results by the navigation device and acquisition results of the information acquisition unit, the SOC amount acquisition unit, and the user request acquisition unit in case of traveling through a stop in the engine restricted zone and a stop outside the engine restricted zone due to a pick-up request or drop-off request from the users, and
a route order suggestion unit which suggests, as a route order for the stops, a route order in which the SOC amount of the battery will not become less than the setting value during travel in the engine restricted zone based on prediction results of the SOC amount prediction unit.

2. The ridesharing management system according to claim 1 further comprising a fallen SOC amount calculation unit which calculates an SOC amount which falls when the vehicle is traveling along the travel route searched by the navigation device, and the SOC amount prediction unit predicts whether the SOC amount of the battery will become less than the setting value during travel in the engine restricted zone using a fallen SOC amount calculated by the fallen SOC amount calculation unit.

3. The ridesharing management system according to claim 1 wherein the route orders for stops are constituted by a first route order traveling to a stop outside the engine restricted zone, then heading toward a stop in the engine restricted zone and a second route order traveling to a stop in the engine restricted zone, then heading toward a stop outside the engine restricted zone, and when it is predicted by the SOC amount prediction unit that the SOC amount of the battery will become less than the setting value during travel in the engine restricted zone for one of the route orders among the first route order and second route order and that the SOC amount of the battery during travel in the engine restricted zone will not become less than the setting value for other route order, the other route order is suggested by the route order suggestion unit as the route order for the stops.

4. The ridesharing management system according to claim 1 wherein the route orders for the stops are constituted by a first route order traveling to a stop outside the engine restricted zone, then heading toward a stop in the engine restricted zone and a second route order traveling to a stop in the engine restricted zone, then heading toward a stop outside the engine restricted zone, an evaluation value calculation unit is provided to calculate evaluation values at the time the vehicle travels according to these route orders, and when it is predicted by the SOC amount prediction unit that the SOC amount of the battery during travel in the engine restricted zone will not become less than the setting value for either of the first route order and second route order, whichever of the first route order and second route order has a higher evaluation value is suggested by the route order suggestion unit as the route order for the stops.

5. The ridesharing management system according to claim 4 wherein at least one item among a ride fee demanded from the users, a travel time of the vehicle for driving for the users, and a travel distance of the vehicle for driving for the users is used as the evaluation value.

6. The ridesharing management system according to claim 1 further comprising a route order creation unit which creates all possible route orders among route orders traveling through a plurality of stops among stops including stops in the engine restricted zone and stops outside the engine restricted zone, wherein route orders among all of the route orders by which it is predicted by the SOC amount prediction unit that the SOC amount of the battery during travel in the engine restricted zone will not become less than the setting value are suggested by the route order suggestion unit.

7. The ridesharing management system according to claim 1 further comprising an evaluation value calculation unit which calculates an evaluation value for each route order at the time when the vehicle travels according to the route order for the route orders by which it is predicted by the SOC amount prediction unit that the SOC amount of the battery during travel in the engine restricted zone will not become less than the setting value, wherein the route orders by which it is predicted by the SOC prediction unit that the SOC amount of the battery during travel in the engine restricted zone will not become less than the setting value are suggested in descending order of evaluation value by the route order suggestion unit.

8. The ridesharing management system according to claim 7 wherein at least one item among a ride fee demanded from a user, a travel time of the vehicle for driving for the users, and a travel distance of the vehicle for driving for the users is used as the evaluation value.

9. The ridesharing management system according to claim 1 further comprising a charging station searching unit for searching for a position of a charging station for charging the battery installed in the vehicle, wherein when there is a charging station on the travel route at the time the vehicle travels according to the route order for the stops, an instruction to charge the battery installed in the vehicle at the charging station is issued.

# FIG. 1

# FIG. 2A

BATTERY
2

VEHICLE DRIVING UNIT
25

23 — G 24

20 ENGINE 21 MG

DRIVING WHEELS

# FIG. 2B

BATTERY
2

VEHICLE DRIVING UNIT
25

23 — G

20 ENGINE 21 MG

DRIVING WHEELS

# FIG. 3

SOC

0%    SOCX    SOCY    100%

# FIG. 4

```
        ( CHARGING CONTROL )
                 │
        ┌────────────────┐
        │   READ  △I     │───40
        └────────────────┘
                 │
        ┌────────────────┐
        │  SOC←SOC+C·△I  │───41
        └────────────────┘
                 │           42
                ╱╲
               ╱  ╲         NO            44
              ╱    ╲───────────────┐     ╱╲
             ╱SOC<SOCX╲            ╱  ╲        NO
             ╲        ╱           ╱    ╲──────────────┐
              ╲      ╱           ╱SOC>SOCY╲           │
               ╲    ╱            ╲        ╱           │
                ╲  ╱              ╲      ╱            │
               YES│                ╲    ╱            │
                  │              YES╲  ╱     45      │
              43  │                  ╲╱              │
    ┌──────────────────┐   ┌──────────────────────┐ │
    │ INSTRUCT ELECTRIC│   │ CANCEL INSTRUCTION TO│ │
    │ POWER GENERATION │   │GENERATE ELECTRIC POWER│ 46
    └──────────────────┘   └──────────────────────┘ │
                  │                    │             │
                  │         ┌──────────────────────┐│
                  │         │STOP REGENERATIVE CONTROL│
                  │         └──────────────────────┘│
                  │                    │            │
                  │←───────────────────┴────────────┘
                  │
              ( END )
```

# FIG. 5

# FIG. 6

```
        ( VEHICLE CONTROL )
                 |
   ┌──────────────────────────────┐
   │ ACQUIRE POSITION INFORMATION │──~ 50
   └──────────────────────────────┘
                 |
   ┌──────────────────────────────┐
   │   READ BOUNDARY INFORMATION  │──~ 51
   └──────────────────────────────┘
                 |        52
              ╱  IN  ╲         NO
           ╱ ENGINE RESTRICTED ╲──────────────────┐
           ╲      ZONE      ╱                      │
              ╲          ╱                         │
                 | YES                             │
   ┌────────────────────┐        ┌──────────────────────┐
   │  INSTRUCT STOPPING │        │  CANCEL INSTRUCTION TO│──~ 55
   │ OF ENGINE RUNNING  │──~ 53  │  STOP ENGINE RUNNING  │
   └────────────────────┘        └──────────────────────┘
                 |                          |
   ┌────────────────────┐        ┌──────────────────────┐
   │ CARRY OUT DRIVING  │        │ CARRY OUT DRIVING CONTROL │──~ 56
   │    CONTROL IN EV   │──~ 54  │  IN EV MODE OR HV MODE │
   │       MODE         │        └──────────────────────┘
   └────────────────────┘                  |
                 |←─────────────────────────┘
           (    END    )
```

# FIG. 7

# FIG. 8

(A)

PICK UP ○————————X1————————△ DROP OFF

○————————X2————————△

(B)

○————————X1————————△

○————————X2————————△

(C)

○————————X1————————△

○————————X2————————△

(D)

○————————X1————————△

○————————X2————————△

## FIG. 9A

## FIG. 9B

# FIG. 10

FIG. 11

# FIG. 12A

# FIG. 12B

# FIG. 13A

# FIG. 13B

# FIG. 14

# FIG. 15

VEHICLE SPEED V

INTERNAL COMBUSTION
ENGINE-POWERED REGION

ELECTRIC
MOTOR-POWERED REGION

ROAD SLOPE

# FIG. 16A

| PASSENGER | PICK-UP STOP | PICK-UP TIME | DROP-OFF STOP | DROP-OFF TIME |
|---|---|---|---|---|
| X1 | . . . | . . . | . . . | . . . . |
| X2 | . . . | . . . | . . . | . . . . |
| X3 | . . . | . . . | . . . | . . . . |
| ⋮ | ⋮ | ⋮ | ⋮ | ⋮ |
| XN | | | | |

# FIG. 16B

| ROUTE ORDER | |
|---|---|
| X1→X3 | NOT ALLOWED |
| X3→X1 | ALLOWED |

# FIG. 16C

| PASSENGER | PICK-UP STOP | PICK-UP TIME | DROP-OFF STOP | DROP-OFF TIME | FEE |
|---|---|---|---|---|---|
| X3 | . . . | . . . | . . . | . . . . | . . . . |
| X1 | . . . | . . . | . . . | . . . . | . . . . |

# FIG. 17A

| EVALUATION VALUE | ROUTE ORDER | |
|---|---|---|
| 1 | X3→X1→X5 | ALLOWED |
| 2 | X1→X3→X5 | ALLOWED |
| 3 | X5→X1→X3 | ALLOWED |

# FIG. 17B

| PASSENGER | PICK-UP STOP | PICK-UP TIME | DROP-OFF STOP | DROP-OFF TIME | FEE |
|---|---|---|---|---|---|
| X3 | · · · | · · · | · · · | · · · · | · · · · |
| X1 | · · · | · · · | · · · | · · · · | · · · · |
| X5 | · · · | · · · | · · · | · · · · | · · · · |

EP 4 056 953 A1

# FIG. 18

```
        ( ROUTE ORDER SUGGESTION )
                    │
        ┌───────────────────────┐
        │    SELECT USERS Xi     │──── 80
        └───────────────────────┘
                    │
        ┌───────────────────────────────┐
        │ CREATE ALL POSSIBLE ROUTE ORDERS │──── 81
        └───────────────────────────────┘
                    │
        ┌───────────────────────────────┐
        │  ACQUIRE POSITION INFORMATION  │──── 82
        └───────────────────────────────┘
                    │
        ┌───────────────────────────┐
        │  READ BOUNDARY INFORMATION  │──── 83
        └───────────────────────────┘
                    │
        ┌───────────────────────┐
        │    FIRST ROUTE ORDER    │──── 84
        └───────────────────────┘
                    │
                    ▼
        ┌───────────────────────┐
        │  RETRIEVE TRAVEL ROUTE  │──── 85
        └───────────────────────┘
                    │
        ┌───────────────────────────────┐
        │ DETERMINE TRAVEL ROUTE PATTERNS │──── 86
        └───────────────────────────────┘
                    │
        ┌───────────────────────────┐
        │  CALCULATE SOC PER PATTERN  │──── 87
        └───────────────────────────┘
                    │
                    ▼
              88
        ╱ TRAVEL ╲
  YES ◄─┤ ROUTE UNSUITABLE ├
        ╲         ╱
              │ NO
              ▼
              89
        ╱ COMPLETED ╲
        ╱ SUITABILITY JUDGMENT ╲
  NO ◄──┤  FOR ALL ROUTE  ├
        ╲    ORDERS    ╱
              │ YES
              ▼
             (1)
```

# FIG. 19

①

CALCULATE EVALUATION VALUE K
FOR EACH ROUTE ORDER — 90

SUGGEST ROUTE ORDERS — 91

END

# FIG. 20A

# FIG. 20B

# FIG. 21

CALCULATION OF SOC(R1)

READ SOC(ST) ~100

CHARGING PROCESSING ~101

CALCULATE △SOC ~102

CALCULATE SOC(EN) ~103

104

SOC(EN)>SOCX — NO

YES  105

CALCULATE TIME OF ARRIVAL

106

CALCULATE EVALUATION
VALUE K

107

TRAVEL ROUTE
UNSUITABLE

END

# FIG. 22

```
        ( CHARGING PROCESSING )
                    │
        ┌───────────────────────────┐
        │ SEARCH FOR CHARGING STATION │──〜110
        └───────────────────────────┘
                    │
                   111
                  ╱    ╲
                 ╱       ╲         NO
                ⟨  CHARGING  ⟩──────────┐
                ⟨ STATION PRESENT ⟩      │
                 ╲       ╱               │
                  ╲    ╱                 │
                   │ YES                 │
        ┌───────────────────┐           │
        │   CALCULATE △SOC   │──〜112    │
        └───────────────────┘           │
                    │                    │
                   113                   │
                  ╱    ╲                 │
                 ╱       ╲      NO        │
                ⟨ PERFORM CHARGING ⟩──────────────┐
                 ╲       ╱                 │       │
                  ╲    ╱                    │       │
                   │ YES                    │       │
                        114                 │       │
        ┌───────────────────┐              │       │
        │  INSTRUCT CHARGING │              │       │
        └───────────────────┘              │       │
                    │                       │       │
                    │◄──────────────────────┘       │
                    │◄──────────────────────────────┘
                    │
               (     END     )
```

# FIG. 23

CALCULATION OF SOC(R2)

READ SOC(ST) — 200

CHARGING PROCESSING — 201

CALCULATE △SOC — 202

CALCULATE SOC(EN) — 203

204
SOC(EN)>SOCX — NO

YES 205
CALCULATE TIME OF ARRIVAL

206
CALCULATE EVALUATION VALUE K

207
TRAVEL ROUTE UNSUITABLE

END

# FIG. 24

CALCULATION OF SOC(R3)

READ SOC(ST) —— 300

CHARGING PROCESSING —— 301

CALCULATE △SOC —— 302

CALCULATE SOC(OUT) —— 303

304
SOC(OUT)>SOCX —— NO

YES

CALCULATE △SOC —— 305

CALCULATE SOC(EN) —— 306

CALCULATE TIME OF ARRIVAL —— 307

308
CALCULATE EVALUATION VALUE K

309
TRAVEL ROUTE UNSUITABLE

END

# FIG. 25

```
        ⎛ CALCULATION OF SOC(R4) ⎞
        ⎝                        ⎠
                    │
        ┌───────────────────────┐
        │     READ SOC(ST)      │───400
        └───────────────────────┘
                    │
        ┌───────────────────────┐
        │  CHARGING PROCESSING  │───401
        └───────────────────────┘
                    │
        ┌───────────────────────┐
        │    CALCULATE △SOC     │───402
        └───────────────────────┘
                    │
        ┌───────────────────────┐
        │   CALCULATE SOC(EN)   │───403
        └───────────────────────┘
                    │
    ┌───────────────────────────┐
    │ CALCULATE TIME OF ARRIVAL │───404
    └───────────────────────────┘
                    │
    ┌───────────────────────────┐
    │ CALCULATE EVALUATION VALUE K │───405
    └───────────────────────────┘
                    │
            ⎛      END      ⎞
            ⎝               ⎠
```

# FIG. 26

GPS RECEIVER DEVICE 9 → INFORMATION ACQUISITION UNIT 70

MAP DATA STORAGE DEVICE 10 →

NAVIGATION DEVICE 11 →

RIDESHARING MANAGEMENT DEVICE 12 →

COMMUNICATION DEVICE 14 →

SOC AMOUNT ACQUISITION UNIT 71

USER REQUEST ACQUISITION UNIT 72

SOC AMOUNT PREDICTION UNIT 73

ROUTE ORDER SUGGESTION UNIT 74

Europäisches
Patentamt

European
Patent Office

Office européen
des brevets

# EUROPEAN SEARCH REPORT

**Application Number**

EP 22 15 5667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/104965 A1 (RAMOT DANIEL [US] ET AL) 2 April 2020 (2020-04-02) * paragraphs [0146], [0147], [0148], [0163] – [0166], [0171] – [0187]; figures 1,5, 8B, 9, 10 * * paragraphs [0188] – [0201], [0227]; figures 11A,11B * ----- | 1-9 | INV. G01C21/34 G06Q10/04 G06Q50/30 |
| Y | US 2020/284599 A1 (CYR STEVEN [US] ET AL) 10 September 2020 (2020-09-10) * paragraphs [0004], [0013] – [0029]; figures 1, 2 * ----- | 1-9 | |
| A,D | JP H07 75210 A (MITSUBISHI MOTORS CORP) 17 March 1995 (1995-03-17) * the whole document * ----- | 1-9 | |

**TECHNICAL FIELDS SEARCHED (IPC)**

G01C
G06Q

The present search report has been drawn up for all claims

| Place of search | Date of completion of the search | Examiner |
|---|---|---|
| The Hague | 28 June 2022 | Bruinsma, Maarten |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 15 5667

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2022

| Patent document cited in search report | | Publication date | Patent family member(s) | | Publication date |
|---|---|---|---|---|---|
| US 2020104965 | A1 | 02-04-2020 | EP 3631707 A1 | | 08-04-2020 |
| | | | JP 2020522789 A | | 30-07-2020 |
| | | | US 2020104965 A1 | | 02-04-2020 |
| | | | WO 2018217640 A1 | | 29-11-2018 |
| US 2020284599 | A1 | 10-09-2020 | CN 111660874 A | | 15-09-2020 |
| | | | DE 102020105859 A1 | | 10-09-2020 |
| | | | US 2020284599 A1 | | 10-09-2020 |
| JP H0775210 | A | 17-03-1995 | JP 3092403 B2 | | 25-09-2000 |
| | | | JP H0775210 A | | 17-03-1995 |

EPO FORM P0459

For more details about this annex : see Official Journal of the European Patent Office, No. 12/82

**EP 4 056 953 A1**

**Patent documents cited in the description**

- JP 7075210 A